# EUROPEAN PATENT SPECIFICATION

(11) **EP 3 997 623 B1**
(45) Date of publication and mention of the grant of the patent: **05.11.2025**
(21) Application number: 20907224.8
(22) Date of filing: 17.11.2020
(51) Int. Cl.: G06N 3/0495, G06N 3/063, G06N 3/082

(54) **ELECTRONIC DEVICE AND CONTROL METHOD THEREOF**
ELEKTRONISCHE VORRICHTUNG UND STEUERUNGSVERFAHREN DAFÜR
DISPOSITIF ÉLECTRONIQUE ET SON PROCÉDÉ DE COMMANDE

(30) Priority: 27.12.2019 KR 20190177115
(43) Date of publication of application: 18.05.2022
(73) Proprietor: Samsung Electronics Co., Ltd., Suwon-si, Gyeonggi-do 16677 (KR)
(72) Inventor: LEE, Jonghun, Suwon-si Gyeonggi-do 16677 (KR); KIM, Kyounghoon, Suwon-si Gyeonggi-do 16677 (KR); IM, Chaeseok, Suwon-si Gyeonggi-do 16677 (KR)
(74) Representative: Gulde & Partner
(86) International application number: PCT/KR2020/016160
(87) International publication number: WO 2021/132889

(56) References cited:
- KR-A- 20190 090 687
- US-A1- 2016 328 644
- US-A1- 2016 328 644
- US-A1- 2018 373 978
- US-A1- 2019 042 542
- US-A1- 2019 108 436
- ALBERICIO JORGE ET AL: "Cnvlutin: Ineffectual-Neuron-Free Deep Neural Network Computing", 2013 21ST INTERNATIONAL CONFERENCE ON PROGRAM COMPREHENSION (ICPC); [INTERNATIONAL SYMPOSIUM ON COMPUTER ARCHITECTURE.(ISCA)], IEEE, US, 18 June 2016 (2016-06-18), pages 1 - 13, XP032950644, ISSN: 1063-6897, ISBN: 978-0-7695-3174-8, [retrieved on 20160824], DOI: 10.1109/ISCA.2016.11
- YIWEN GUO ET AL: "Dynamic Network Surgery for Efficient DNNs", ARXIV.ORG, CORNELL UNIVERSITY LIBRARY, 201 OLIN LIBRARY CORNELL UNIVERSITY ITHACA, NY 14853, 16 August 2016 (2016-08-16), XP080720762
- KIM SANGYEOB ET AL: "A 146.52 TOPS/W Deep-Neural-Network Learning Processor with Stochastic Coarse-Fine Pruning and Adaptive Input/Output/Weight Skipping", 2020 IEEE SYMPOSIUM ON VLSI CIRCUITS, IEEE, 16 June 2020 (2020-06-16), pages 1 - 2, XP033808762, DOI: 10.1109/VLSICIRCUITS18222.2020.9162795
- UNKNOWN ET AL: "Sparsification and Separation of Deep Learning Layers for Constrained Resource Inference on Wearables", PROCEEDINGS OF THE 14TH ACM CONFERENCE ON EMBEDDED NETWORK SENSOR SYSTEMS CD-ROM, SENSYS '16, 14 November 2016 (2016-11-14), New York, New York, USA, pages 176 - 189, XP055421681, ISBN: 978-1-4503-4263-6, DOI: 10.1145/2994551.2994564
- JIECAO YU ; ANDREW LUKEFAHR ; DAVID PALFRAMAN ; GANESH DASIKA ; REETUPARNA DAS ; SCOTT MAHLKE: "Scalpel", PROCEEDINGS OF THE 44TH ANNUAL INTERNATIONAL SYMPOSIUM ON COMPUTER ARCHITECTURE , ISCA '17, ACM PRESS, NEW YORK, NEW YORK, USA, 24 June 2017 (2017-06-24) - 28 June 2017 (2017-06-28), New York, New York, USA, pages 548 - 560, XP058369127, ISBN: 978-1-4503-4892-8, DOI: 10.1145/3079856.3080215

## Description

### [Technical Field]

Apparatuses and methods consistent with the disclosure relate to an electronic device and a control method thereof, and more particularly, to an electronic device that performs a neural network weight reduction operation and a control method thereof.

### [Background Art]

When performing a deep neural network (DNN) in an electronic device with limited resources, a neural network weight reduction technique that converts an existing neural network into a smaller (simple) neural network model is very important. This is because, through the neural network weight reduction, a size of a parameter may be reduced to reduce a memory bandwidth and power consumption due to transmission, and the amount of calculation may be greatly reduced by using a compressed parameter for calculation.

Most of the DNN operations are configured with the product of inputs (features) and weights (or parameters) and forcing the values of some of the parameters to 0 is called pruning. When the pruning is applied, only parameters having a value of being not 0 may be compressed to reduce the amount of data transmission, and parameters with a value of 0 may be excluded from the calculation, thereby greatly reducing the amount of calculation. However, as a trained parameter value is changed, it may differ from an actual accuracy. Therefore, it is possible to recover to approximate the accuracy before the pruning through a retraining process.

US 2016/328644A1 discloses an artificial neural network process based on current system resources and performance specifications. In ALBERICIO JORGE ET AL, titled "Cnvlutin: Ineffectual-Neuron-Free Deep Neural Network Computing", DOI: 10.1109/ISCA.2016.11, a cnvlutin (CNV) model which is a value-based approach to hardware acceleration that eliminates ineffectual operations is disclosed, whereby the CNV eliminates the zero neurons at the output of the preceding layer. In Bhattacharya ET AL, titled "Sparsification and Separation of Deep learning layers for constrained resource inference on wearable*",* a deep learning approach that uses sparsification of fully connected layers and separation of convolutional kernels to reduce the resource requirement is discussed. US 2018/373978 A1 relates to a deep neural network (DNN) model considering weight parameters for reducing redundancy.

### [Disclosure of Invention]

### [Technical Problem]

As described above, by using the neural network weight reduction operation, it is possible to reduce the power consumption and reduce the amount of calculation. However, in the related art, once a neural network weight reduction method is already determined, there was a problem that the determined weight reduction method is merely operated and scalability is impossible. Specifically, there was a problem that the neural network weight reduction is merely uniformly applied according to the resources of the electronic device, and efficient operation is impossible because the weight reduction method is uniformly applied according to various situations of the electronic device.

### [Solution to Problem]

Embodiments of the disclosure overcome the above disadvantages and other disadvantages not described above. Also, the disclosure is not required to overcome the disadvantages described above, and an embodiment of the disclosure may not overcome any of the problems described above.

The disclosure provides an electronic device that performs a neural network weight reduction operation in consideration of resource information of the electronic device, and a control method thereof.

The present invention is defined by the independent claims. Preferred embodiments are defined by the dependent claims. According to an embodiment of the disclosure, an electronic device is provided as defined by the appended claims.

According to another embodiment of the disclosure, a control method of an electronic device in which first information and second information are stored is provided as defined by the appended claims.

Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely.

Moreover, various functions described below can be implemented or supported by one or more computer programs, each of which is formed from computer readable program code and embodied in a computer readable medium. The terms "application" and "program" refer to one or more computer programs, software components, sets of instructions, procedures, functions, objects, classes, instances, related data, or a portion thereof adapted for implementation in a suitable computer readable program code. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable memory device.

Definitions for certain words and phrases are provided throughout this patent document, those of ordinary skill in the art should understand that in many, if not most instances, such definitions apply to prior, as well as future uses of such defined words and phrases.

### [Brief Description of Drawings]

The above and/or other aspects of the disclosure will be more apparent by describing certain embodiments of the disclosure with reference to the accompanying drawings, in which:
FIG. 1 is a block diagram illustrating an electronic device;
FIG. 2 is a block diagram for describing a detailed configuration of the electronic device of FIG. 1;
FIG. 3 is a diagram for describing a zero-skipping operation;
FIG. 4 is a diagram for describing a zero-skipping operation;
FIG. 5A is a diagram for describing an operation of an example of obtaining a weight matrix based on information generated by the zero-skipping operation of FIG. 4;
FIG. 5B is a diagram for describing an operation of another example of obtaining the weight matrix;
FIG. 6A is a diagram for describing various examples of obtaining the weight matrix;
FIG. 6B is a diagram for describing other examples of obtaining the weight matrix;
FIG. 7 is a diagram for describing a pruning operation and a zero-skipping operation;
FIG. 8 is a diagram for describing an example of obtaining weight information;
FIG. 9 is a diagram for describing an example of generating weight information;
FIG. 10A is a diagram for describing another example of generating weight information;
FIG. 10B is a diagram for describing an operation of applying another calculation process in the example of FIG. 10A;
FIG. 10C is a diagram for describing still another example of generating weight information;
FIG. 11 is a diagram for describing a distribution of weights changed based on a pruning operation;
FIG. 12 is a diagram for describing an example of determining a weight without considering resources of an electronic device;
FIG. 13 is a diagram for describing an example of determining a weight in consideration of resources of an electronic device;
FIG. 14A is a diagram for describing an operation of sorting a plurality of weights into a plurality of classes;
FIG. 14B is a diagram for describing a calculation process of the operation of sorting the plurality of weights into the plurality of classes;
FIG. 14C is a diagram for continuously describing the operation of FIG. 14B;
FIG. 14D is a diagram for describing a distribution of weights;
FIG. 15 is a diagram for describing an example of performing artificial intelligence analysis based on weight information sorted into the plurality of classes;
FIG. 16 is a diagram for describing another example of performing artificial intelligence analysis based on weight information sorted into the plurality of classes;
FIG. 17 is a diagram for describing an example of identifying classes in consideration of the resource information;
FIG. 18 is a diagram for describing another example of identifying classes in consideration of the resource information;
FIG. 19 is a diagram for describing still another example of identifying classes in consideration of the resource information;
FIG. 20 is a flowchart for describing an operation of setting an operation point;
FIG. 21 is a diagram for describing a control method of an electronic device; and
FIG. 22 is a diagram for comparing a change in latency according to a change in an operation point.

### [Mode for the Invention]

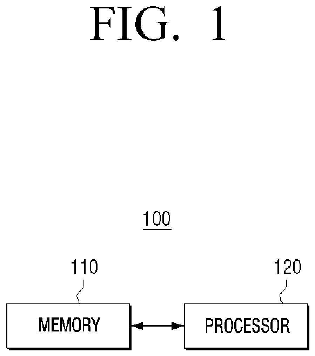

FIGS. 1 through 22, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged system or device

Hereinafter, the disclosure will be described in detail with reference to the accompanying drawings.

General terms that are currently widely used were selected as terms used in embodiments of the disclosure in consideration of functions in the disclosure, but may be changed depending on the intention of those skilled in the art or a judicial precedent, an emergence of a new technique, and the like. In addition, in a specific case, terms arbitrarily chosen by an applicant may exist. In this case, the meaning of such terms will be mentioned in detail in a corresponding description portion of the disclosure. Therefore, the terms used in the disclosure should be defined on the basis of the meaning of the terms and the contents throughout the disclosure rather than simple names of the terms.

In the disclosure, an expression "have", "may have", "include", "may include", or the like, indicates an existence of a corresponding feature (for example, a numerical value, a function, an operation, a component such as a part, or the like), and does not exclude an existence of an additional feature.

The expression "at least one of A and/or B" should be understood to represent either "A" or "B" or any one of "A and B".

Expressions "first", "second", or the like, used in the disclosure may indicate various components regardless of a sequence and/or importance of the components, will be used only in order to distinguish one component from the other components, and do not limit the corresponding components.

When it is mentioned that any component (for example, a first component) is (operatively or communicatively) coupled with/to or is connected to another component (for example, a second component), it is to be understood that any component is directly coupled with/to another component or may be coupled with/to another component through the other component (for example, a third component).

Singular expressions include plural expressions unless the context clearly indicates otherwise. It should be further understood that the term "include" or "constituted" used in the application specifies the presence of features, numerals, steps, operations, components, parts mentioned in the specification, or combinations thereof, but do not preclude the presence or addition of one or more other features, numerals, steps, operations, components, parts, or combinations thereof.

In the disclosure, a 'module' or a '~er/~or' may perform at least one function or operation, and be implemented by hardware or software or be implemented by a combination of hardware and software. In addition, a plurality of 'modules' or a plurality of '~ers/ors' may be integrated in at least one module and be implemented as at least one processor (not illustrated) except for a 'module' or an '~er/or' that needs to be implemented by specific hardware.

In the disclosure, a term "user" may be a person that uses the electronic device or a device (e.g., an artificial intelligence electronic device) that uses the electronic device.

Hereinafter, an embodiment of the disclosure will be described in more detail with reference to the accompanying drawings.

The functions related to the artificial intelligence according to the disclosure are operated through a processor and a memory. The processor may be configured as one or a plurality of processors. At this time, one or the plurality of processors may be a general-purpose processor such as a CPU, an AP, or a digital signal processor (DSP), a graphic-dedicated processor such as a GPU or a vision processing unit (VPU), or an artificial intelligence dedicated processor such as a neural network processing unit (NPU). One or the plurality of processors perform a control to process input data according to predefined operating rules or artificial intelligence models stored in the memory. Alternatively, when one or the plurality of processors are an artificial intelligence dedicated processor, the artificial intelligence dedicated processor may be designed in a hardware architecture specialized for the processing of a specific artificial intelligence model.

The predefined operating rules or artificial intelligence models are characterized by being created through training (learning). Here, the creating through training means that a basic artificial intelligence model is trained by using a plurality of training data by a training algorithm, thereby creating the predefined operation rules or artificial intelligence models set to perform a desired characteristic (or purpose). Such training may be performed in a device itself in which the artificial intelligence according to the disclosure is performed, or may also be performed through a separate server and/or system. An example of the training algorithm includes supervised training (learning), unsupervised (learning), semi-supervised (learning), or reinforcement (learning), but the training algorithm is not limited to the example described above.

The artificial intelligence model may include a plurality of neural network layers. Each of the plurality of neural network layers has a plurality of weight values and performs a neural network operation through an operation between an operation result of a previous layer and the plurality of weights. The plurality of weights of the plurality of neural network layers may be optimized by a training result of the artificial intelligence model. For example, the plurality of weights may be updated so that a loss value or a cost value acquired from the artificial intelligence model is reduced or minimized during a training process. The artificial neural network may include a deep neural network (DNN), and an example thereof includes a convolutional neural network (CNN), a deep neural network (DNN), a recurrent neural network (RNN), a restricted boltzmann machine (RBM), a deep belief network (DBN), a bidirectional recurrent deep neural network (BRDNN), or deep Q-networks, but is not limited to the example described above.

FIG. 1 is a block diagram illustrating an electronic device.

Referring to FIG. 1, an electronic device 100 may include a memory 110 and a processor 120.

The electronic device 100 according to diverse embodiments of the disclosure may include at least one of, for example, a smartphone, a tablet personal computer (PC), a mobile phone, an image phone, a desktop personal computer (PC), a laptop personal computer (PC), a netbook computer, a workstation, a server, a personal digital assistant (PDA), a portable multimedia player (PMP), an MP3 player, a camera, or a wearable device. The wearable device may include at least one of an accessory type wearable device (for example, a watch, a ring, a bracelet, an ankle bracelet, a necklace, a glasses, a contact lens, or a head-mounted-device (HMD)), a textile or clothing integral type wearable device (for example, an electronic clothing), a body attachment type wearable device (for example, a skin pad or a tattoo), or a bio-implantable circuit. In some embodiments, the electronic device 100 may include at least one of, for example, a television, a digital video disk (DVD) player, or an audio player.

The memory 110 may be implemented as an internal memory such as a ROM (e.g., electrically erasable programmable read-only memory (EEPROM)) or a RAM included in the processor 120, or be implemented as a memory separate from the processor 120. In this case, the memory 110 may be implemented in a form of a memory embedded in the electronic device 100 or a form of a memory attachable to and detachable from the electronic device 100, depending on a data storage purpose. For example, data for driving the electronic device 100 may be stored in the memory embedded in the electronic device 100, and data for extended function of the electronic device 100 may be stored in the memory attachable to and detachable from the electronic device 100.

Meanwhile, the memory embedded in the electronic device 100 may be implemented as at least one of a volatile memory (e.g., a dynamic random access memory (DRAM), a static RAM (SRAM), a synchronous dynamic RAM (SDRAM), or the like), or a non-volatile memory (e.g., a one time programmable read only memory (OTPROM), a programmable ROM (PROM), an erasable and programmable ROM (EPROM), an electrically erasable and programmable ROM (EEPROM), a mask ROM, a flash ROM, a flash memory (e.g., a NAND flash, a NOR flash, or the like), a hard drive, or a solid state drive (SSD)), and the memory attachable to and detachable from the electronic device 100 may be implemented in the form such as a memory card (e.g., a compact flash (CF), a secure digital (SD), a micro secure digital (Micro-SD), a mini secure digital (Mini-SD), an extreme digital (xD), a multi-media card (MMC), or the like), an external memory (e.g., a USB memory) connectable to a USB port, or the like.

The memory 110 may store at least one instruction. Here, the instruction may refer to at least one of a user's command, a user's operation, or a preset event.

The memory 110 according to an embodiment of the disclosure may store an artificial intelligence model. Meanwhile, the artificial intelligence model is not necessarily stored in the memory 110 of the electronic device 100, and the artificial intelligence model may be implemented in a form that is stored in an external server.

The processor 120 may perform an overall control operation of the electronic device 100.

The processor 120 may be implemented as a digital signal processor (DSP), a microprocessor, or a time controller (TCON) that processes a digital signal. However, the processor 120 is not limited thereto, but may include one or more of a central processing unit (CPU), a micro controller unit (MCU), a micro processing unit (MPU), a controller, an application processor (AP), a graphics-processing unit (GPU), a communication processor (CP), and an ARM processor, or may be defined as the corresponding term. In addition, the processor 120 may also be implemented as a system-on-chip (SoC) or a large scale integration (LSI) in which a processing algorithm is embedded, and may also be implemented in the form of a field programmable gate array (FPGA). In addition, the processor 120 may perform various functions by executing computer executable instructions stored in the memory 110.

The processor 120 may include a processor that obtains a first weight matrix by loading first information or obtains a second weight matrix by loading the first information and second information, based on resource information of the electronic device 100. Here, the first information may include weights related to the first weight matrix and a first index corresponding to the weights related to the first weight matrix, and the second information may include an additional weight for obtaining the second weight matrix and a second index corresponding to the additional weight.

The processor 120 may determine whether to load the first information or both the first information and the second information based on the resource information. Here, the first information and the second information may refer to information related to weights corresponding to a first class and a second class.

Here, the class may be a group obtained by sorting weight values obtained in the process of compressing the weight matrix used in the artificial intelligence model according to a size. For example, assume that an original weight matrix includes 100 weights. Assuming that as the original weight matrix is compressed (for example, pruned), 50 weights among 100 weights are pruned to 0 and 50 weights have a non-zero value, weights having a threshold value or more among the 50 weights may be assigned to the first class, and weights having a weight value less than the threshold value among the 50 weights may be assigned to the second class. Meanwhile, the number of classes, the number of threshold values, and the threshold value may vary according to embodiments.

Therefore, in the disclosure, the obtaining of the first weight matrix by loading the first information may refer to obtaining a weight matrix based on information on weights included (or assigned) in the first class. In addition, the obtaining of the second weight matrix by loading the first information and the second information may refer to obtaining a weight matrix based on information on both the weights included in the first class and the weights included in the second class.

Meanwhile, the processor 120 determines whether to use weight information (or weight data, hereinafter, collectively described as weight information for convenience) corresponding to the first class or use weight information corresponding to the first class and the second class, based on the resource information of the electronic device 100. Here, the resource information may refer to information related to a resource related to hardware of the current electronic device 100, a required resource required to execute a specific module or a specific application, or the like. For example, the resource information may include at least one of an internal memory capacity (total capacity, used capacity, available capacity) of the electronic device 100, a power state of the electronic device 100, a resource of an application executed in the electronic device 100, or a resource of an artificial intelligence model executed in the electronic device 100.

Here, the used capacity of the internal memory may refer to a capacity that is already used among the total capacity of the internal memory, and the available capacity may refer to a capacity currently available in the internal memory. For example, the available capacity may be calculated as a capacity obtained by subtracting the used capacity of the internal memory from the total capacity of the internal memory.

The power state of the electronic device 100 may refer to a current power state of the electronic device 100 or a currently set power mode. For example, if the power of the electronic device 100 is currently insufficient and both first and second information are uploaded, the load may be high. Accordingly, the processor 120 may obtain the weight matrix by loading only the first information. Alternatively, when the electronic device 100 is in a low power mode, the weight matrix may be obtained by loading only the first information.

The resource of the application executed in the electronic device 100 may be related to the accuracy of the weight matrix required by the artificial intelligence model used in a currently executing application. For example, if the weight matrix used in the currently executing application is a first weight matrix that may be obtained only with the first information, only the first information may be loaded, and if the weight matrix used in the currently executing application is a second weight matrix that may be obtained with the first information and the second information, both the first information and the second information may be loaded.

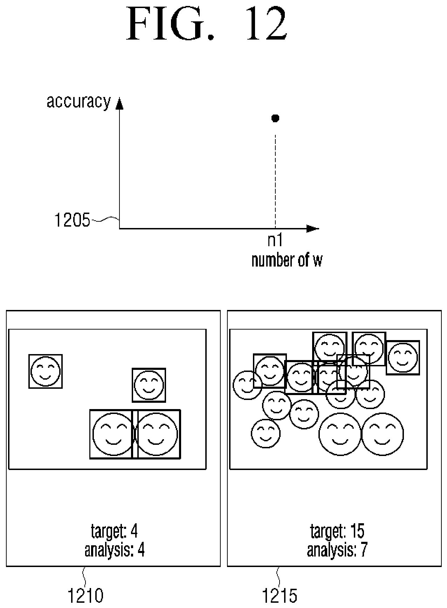

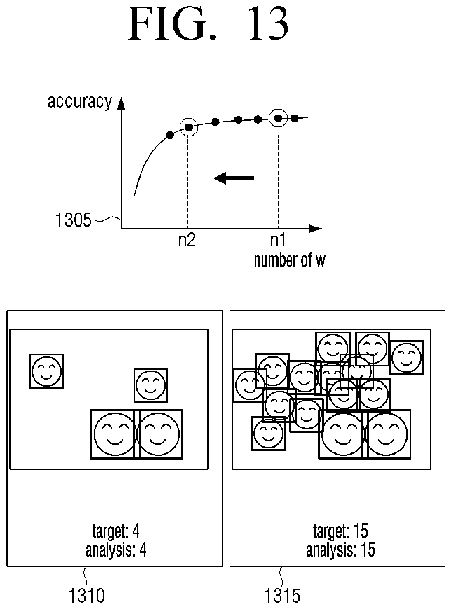

Meanwhile, even when the same application or the same artificial intelligence model is used, the required resource may vary in real time. For example, a weight matrix required to perform a first function and a weight matrix required to perform a second function in the same application may be different. A specific operation will be described later with reference to FIGS. 12 and 13.

As described above, the processor 120 determines whether to use weight information corresponding to the first class, that is, the first information, or whether to use weight information corresponding to the first class and the second class, that is, both the first information and the second information, based on the resource information of the electronic device 100.

As described above, the processor 120 identifies a class combination based on the resource information and obtain weight information corresponding to the identified class combination. Then, the processor 120 obtains a weight matrix based on the obtained weight information. Then, the processor 120 may obtain output data based on the obtained weight matrix and input data.

Meanwhile, the resource information may be changed in real time, and the processor 120 may obtain the resource information of the electronic device 100 in real time. Then, if the processor 120 identifies that the resource has been changed by a threshold value or more based on the obtained resource information, the processor 120 obtains a new weight matrix. Here, the threshold value may be obtained based on available resources of the internal memory and resources for each class.

An example in which the resource information is changed may include an increase and a decrease in the number of currently used resources. Because the decrease in the currently used resource is an increase in the available resource, there is no problem in a processing operation, but because the increase in the currently used resource is a decrease in the available resource, the problem may occur.

Hereinafter, for convenience of description, the description will be made under assumption that the resource information of the electronic device 100 is related to the available capacity of the internal memory of the processor 120.

The processor 120 may determine the available capacity of the internal memory in real time. When the available capacity of the internal memory decreases while using the second weight matrix obtained by currently using the first and second information, the processor 120 may obtain the first weight matrix by excluding the second information from the second weight matrix in order to change the second weight matrix into the first weight matrix. On the other hand, there may be a case in which the number of targets for artificial intelligence analysis is increased or relatively high accuracy is required. When the number of targets for artificial intelligence analysis increases while using the first weight matrix obtained by currently using the first information, the processor 120 may obtain the second weight matrix by adding the second information to the first weight matrix in order to change the first weight matrix into the second weight matrix. Hereinafter, a specific method of obtaining the first weight matrix or the second weight matrix using the first information, or the first information and the second information will be described.

If a first weight matrix to be applied to the artificial intelligence model is required, the processor 120 obtains first weight information (or first information) corresponding to the first class. In addition, the first weight information includes a weight included in the first class and a first index corresponding to the weight included in the first class. Here, the first index may include a plurality of indexes corresponding to each of a plurality of weights. For example, if the number of weights included in the first class is three, the number of first indexes may also be three.

The processor 120 according to an embodiment obtains the first weight matrix based on the first weight information. Here, the first weight matrix is obtained using only the first class and may be a matrix to which a relatively high weight is reflected.

If a second weight matrix to be applied to the artificial intelligence model is required, the processor 120 obtains second weight information (or second information) corresponding to the second class as well as the first weight information (or the first information) corresponding to the first class. The second weight information includes a weight included in the second class and a second index corresponding to the weight included in the second class. Here, because the weight included in the second class is used to construct the second weight matrix together with the weight included in the first class, the weight included in the second class will be referred to as an additional weight below.

Meanwhile, the processor 120 obtains the second weight matrix by combining the additional weight with the weight included in the first weight information based on the first index and the second index.

Specifically, the processor 120 may determine a position of a weight corresponding to the first index in the second weight matrix based on the first index, may determine a position of an additional weight corresponding to the second index in the second weight matrix based on the second index, may change at least one of the first index or the second index based on the position of the weight corresponding to the first index and the position of the weight corresponding to the second index, and may obtain the second weight matrix based on the position of the weight, the position of the additional weight, and the changed index.

In generating the second weight matrix, the processor 120 may identify the position of the weight included in the first weight information based on the first index included in the first weight information and may identify the position of the weight (additional weight) included in the second weight information based on the second index included in the second weight information.

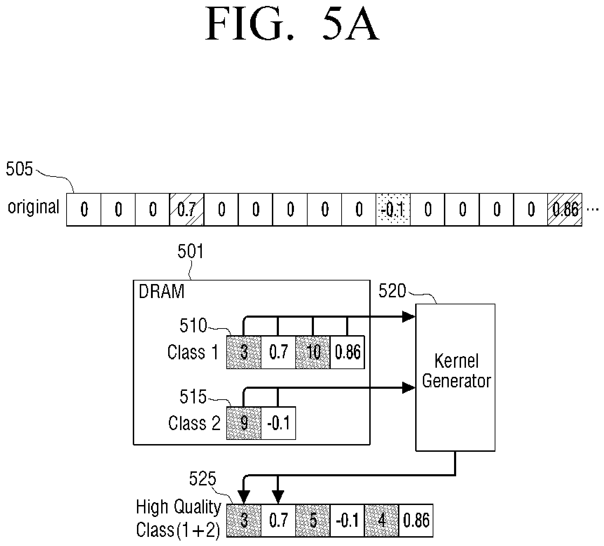

Here, in generating the second weight matrix, the processor 120 may change at least one of the first index or the second index as necessary. Because the second weight matrix is a combination of the first weight information and the second weight information, the first index and the second index may not be used as it is. Therefore, in generating the second weight matrix, values of the first index or the second index may be changed. However, an initial index (either the first index or the second index) that is initially stored may not be changed. For example, in FIG. 5A, the first index included in the first weight information is {3,10} and the second index included in the second weight information is {9}. However, an index of newly created weight information is {3,5,4}. Only 3, which is the initial index, is maintained, and values of both the first index and the second index may be changed.

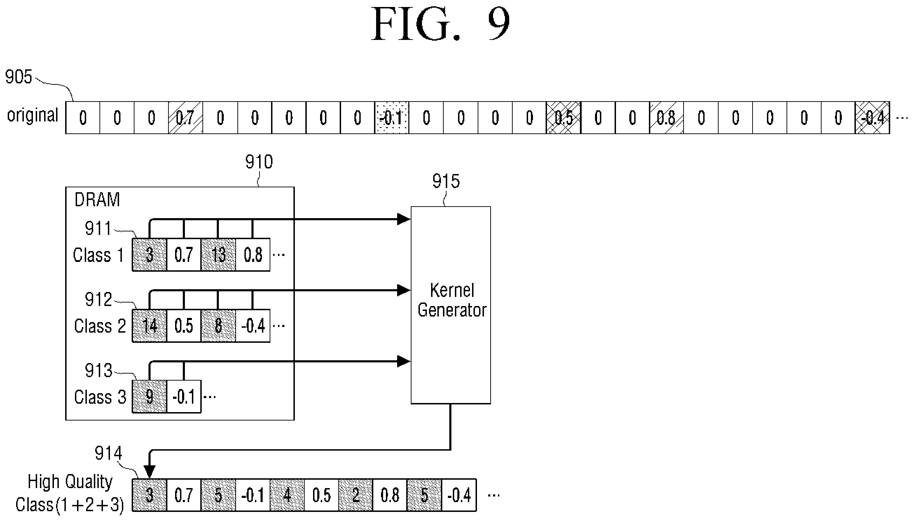

A detailed operation of generating new weight information and a new weight matrix based on the combining operation will be described with reference to FIGS. 5A and 9.

Meanwhile, the first weight information may include weights of a second threshold value or more in information obtained by pruning weights less than a first threshold value in the weight information and an index corresponding to the weights of the second threshold value or more, and the second weight information may include weights less than the second threshold value in the information obtained by pruning and an index corresponding to the weights less than the second threshold value.

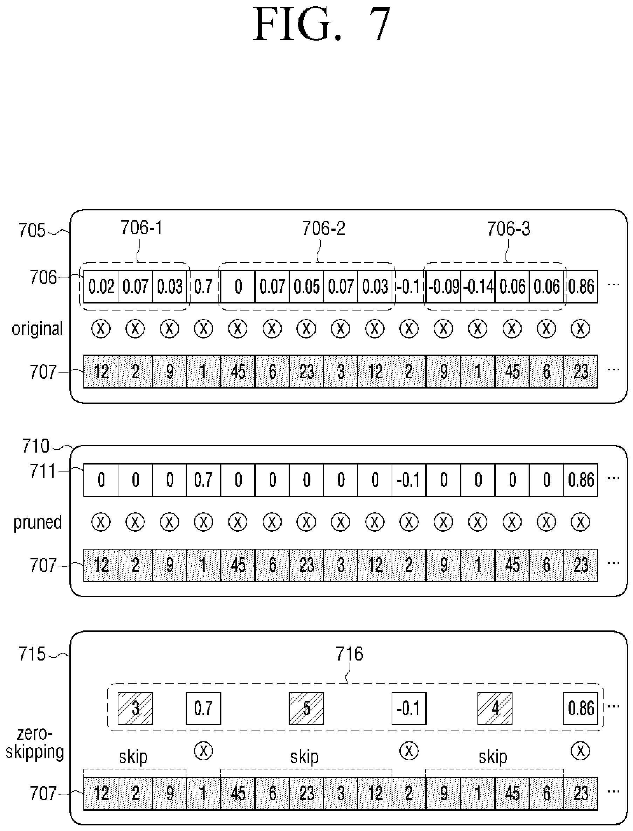

Here, the weight information may refer to a group of original weights which are not sorted according to the classes. The weight information may correspond to reference numeral 706 of FIG. 7.

Here, the pruning operation may refer to an operation of changing a weight less than a threshold value to zero. The processor 120 may perform the pruning operation of changing the weights less than the first threshold value among a plurality of weights included in the weight information to zero.

The weight information changed by performing the pruning operation may be described as pruned weight information. The pruned weight information may correspond to reference numeral 711 of FIG. 7.

The processor 120 may sort a plurality of weights included in the pruned weight information into a plurality of classes. Specifically, the processor 120 may sort the plurality of weights included in the pruned weight information into the plurality of classes based on a size value of a weight. The processor 120 may assign weights having a size value of a weight (or importance of a weight) of a second threshold value or more among the plurality of weights included in the pruned weight information to the first class, and may assign weights less than the second threshold value to the second class. The weights having a relatively high size value may be assigned to the first class, and the weights having a relatively low size value may be assigned to the second class. Here, the first threshold value and the second threshold value may be used as different criteria and may have different values.

Meanwhile, the processor 120 may obtain the weights included in the first class (class a11) among the plurality of weights included in the pruned weight information (class A1) and the first index corresponding to the weights included in the first class (class a12). In addition, the processor 120 may obtain the weights included in the second class (class a12) among the plurality of weights included in the pruned weight information (class A1) and the second index corresponding to the weights included in the second class (class a12).

Meanwhile, the first information may include weights (class a13) obtained by performing a first training for the weights (class a11) of the second threshold value or more in the information (class A1) obtained by pruning (pruned weight information) and an index corresponding to the weights (class a13) obtained by performing the first training, the second information may include weights (class a14) obtained by performing a second training for the weights (class a13) of the second threshold value or more and the weights (class a12) less than the second threshold value in the information (class A1) obtained by pruning (pruned weight information) and an index corresponding to the weights (class a14) obtained by performing the second training, and the weights (class a13) of the second threshold value or more may be fixed during the second training. In addition, The processor 120 may be configured to change the first information (class a11) by performing a first training based on the first information, change the second information (class a12) by performing a second training based on the first information and the second information, and obtain the first weight matrix by loading the changed first information (class a13) or obtain the second weight matrix by loading the changed first information (class a13) and the changed second information (class a14). In addition, the processor 120 may be configured to obtain weights (class a13) by performing a first training for the weights (class a11) of the second threshold value or more in the information (class A1) obtained by pruning, obtain an index corresponding to the weights (class a13) obtained by performing the first training, change the weights (class a11) and the index included in the first information to the weights (class a13) obtained by performing the first training and the index corresponding to the weights (class a13) obtained by performing the first training, obtain weights (class a14) less than the second threshold value in the weights (class a13 and class a14) obtained by performing a second training for the weights (class a13) obtained by performing the first training and the weights (class a12) less than the second threshold value in the information obtained by pruning, obtain an index corresponding to the weights (class a14) less than the second threshold value in the weights (class a13 and class a14) obtained by performing the second training, change the weights (class a12) and the index included in the second information to the weights (class a14) less than the second threshold value in the weights (class a13 and class a14) obtained by performing the second training and the index corresponding to the weights (class a14) less than the second threshold value in the weights (class a13 and class a14) obtained by performing the second training, obtain the first weight matrix by loading the changed first information (class a13) or obtain the second weight matrix by loading the changed first information (class a13) and the changed second information (class a14). In addition, the weights (class a13) of the second threshold value or more are fixed during the second training.

Here, the first training and the second training may correspond to a retraining process. The retraining process may refer to a process of checking modified weight information to reduce errors. Existing weight information may be changed in the retraining process. The first training may be retraining for one class, and the second training may be retraining for a plurality of classes.

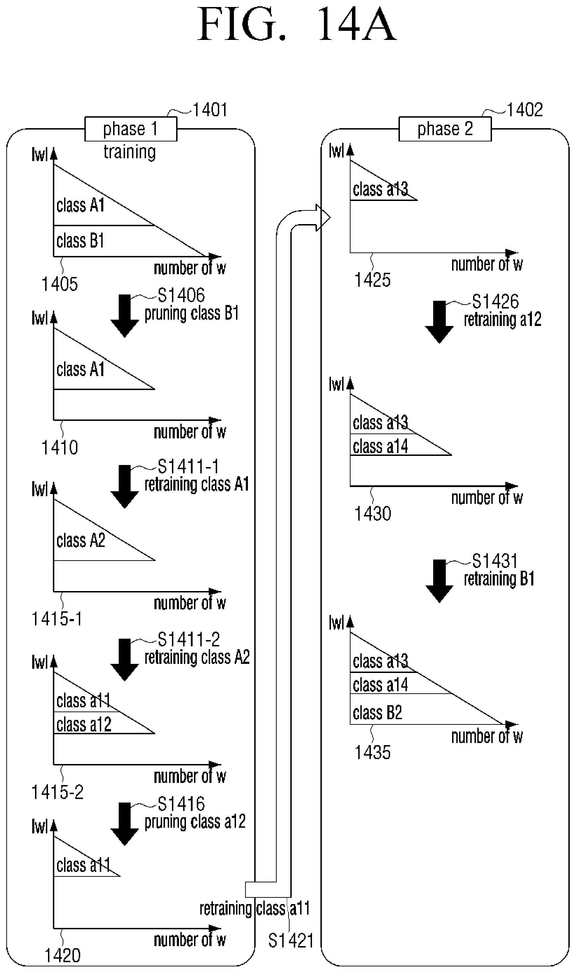

Referring to step S1421 of FIG. 14A, when weights included in a specific class are retrained, the weights may be changed. The processor 120 may assign the weights of the second threshold value or more in the pruned weight information to the first class. In addition, the processor 120 may retrain (first training) the weights assigned (included) to the first class. Here, the weights included in the first class may be changed during retraining (first training).

Referring to step S1426 of FIG. 14A, when the weights included in the plurality of classes are retrained, the weights may not be changed for some of the plurality of classes and the weights may be changed for the rest of the plurality of classes. The processor 120 may assign the weights of the second threshold value or more in the pruned weight information to the first class, and may assign the weights less than the second threshold value in the pruned weight information to the second class. In addition, the processor 120 may retrain (second training) the weights assigned (included) to the first class and the second class. Here, the weights included in the first class may be fixed during retraining (second training), and only the weights included in the second class may be changed during retraining (second training). When the retraining operation is performed on the plurality of classes, the weights included in a class with relatively high weights may be fixed and the weights included in a class with relatively low weights may be changed.

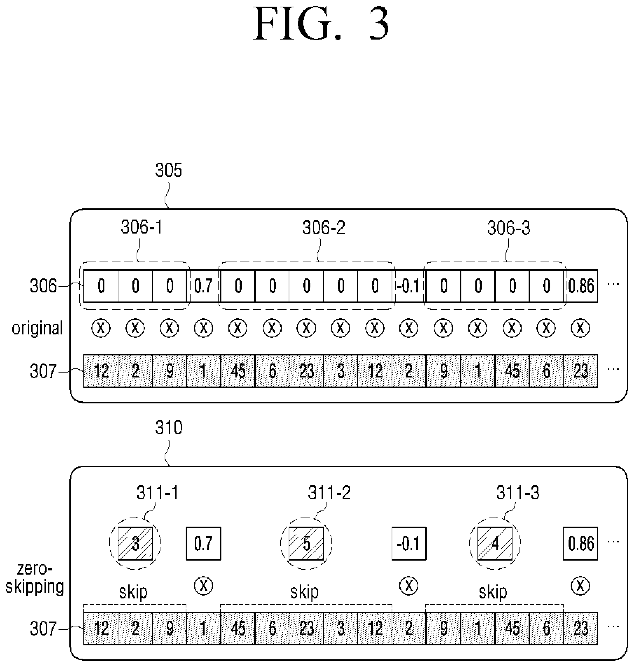

Meanwhile, the processor 120 may perform a pruning operation based on the weight information, may perform a zero-skipping operation on the pruned weight information, and may sort weight information on which the pruning and zero-skipping operations are performed into the plurality of classes. The zero-skipping operation will be described later with reference to FIGS. 3 and 7. Meanwhile, according to an embodiment, at least one of the pruning operation, the zero-skipping operation, or the operation of sorting the weight information into the plurality of classes may be omitted, and the order thereof may also be changed.

Meanwhile, the first weight matrix is a matrix obtained using the first weight information and the second weight matrix is a matrix obtained by using the first weight information and the second weight information. Specifically, the processor 120 may obtain third weight information by combining the first weight information and the second weight information to generate the second weight matrix. The third weight information may include the weights included in the first class and the second class, and an index (third index) corresponding to the weights included in the first class and the second class. In addition, the processor 120 may obtain the second weight matrix based on the obtained third weight information.

The processor 120 may perform an operation of erasing weights included in a specific class from the existing weight information. It is assumed that the processor 120 has already obtained the second weight matrix by using the first weight information and the second weight information. During artificial intelligence analysis using the second weight matrix, there may be a situation in which resources are insufficient due to insufficient internal memory. Here, the processor 120 may change the weight information or the weight matrix to reduce the resources required for artificial intelligence analysis. For example, the processor 120 may perform an operation of erasing weights included in a class having a low weight among the plurality of classes to reduce the resources.

The processor 120 may obtain the first weight matrix by erasing an additional weight corresponding to the second index from third weight information based on weights included in the third weight information corresponding to the second weight matrix, the third index corresponding to the weights, and the second index.

Here, the third weight information corresponding to the second weight matrix may be information obtained by combining the first weight information and the second weight information. In addition, the weights included in the third weight information may refer to the weights included in the first class and the second class. In addition, the third index corresponding to the weights may refer to an index corresponding to the weights included in the first class and the second class. In addition, the additional weight corresponding to the second index may refer to a weight included in the second class.

Here, the processor 120 may determine a position of the additional weight in the second weight matrix based on the second index and the third index, may erase the additional weight from the third weight information based on the position of the additional weight, and may obtain the first weight matrix by modifying an index of weights adjacent to the position of the erased additional weight in the third weight information.

Here, the additional weight may refer to a weight included in the second class.

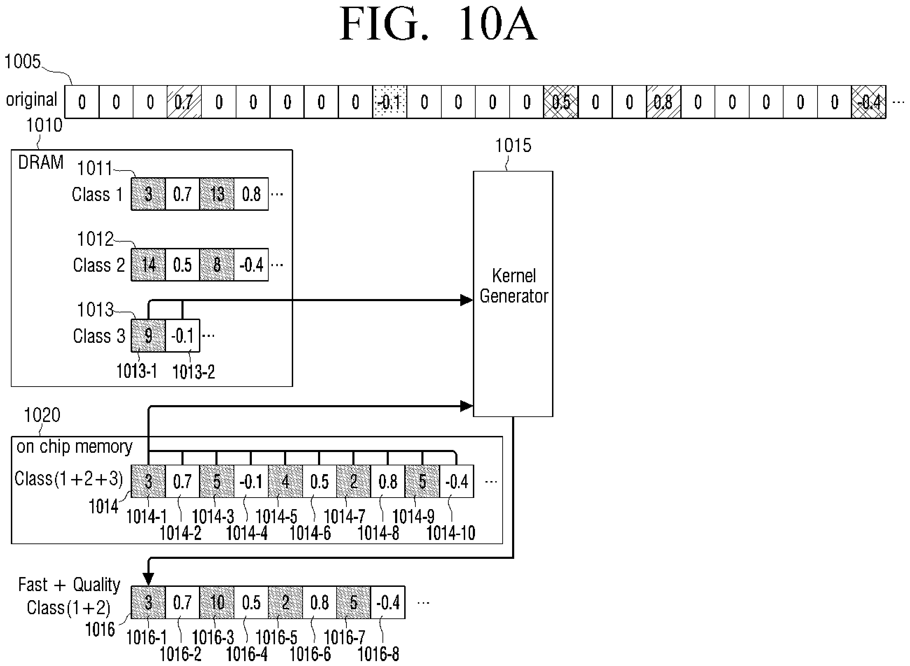

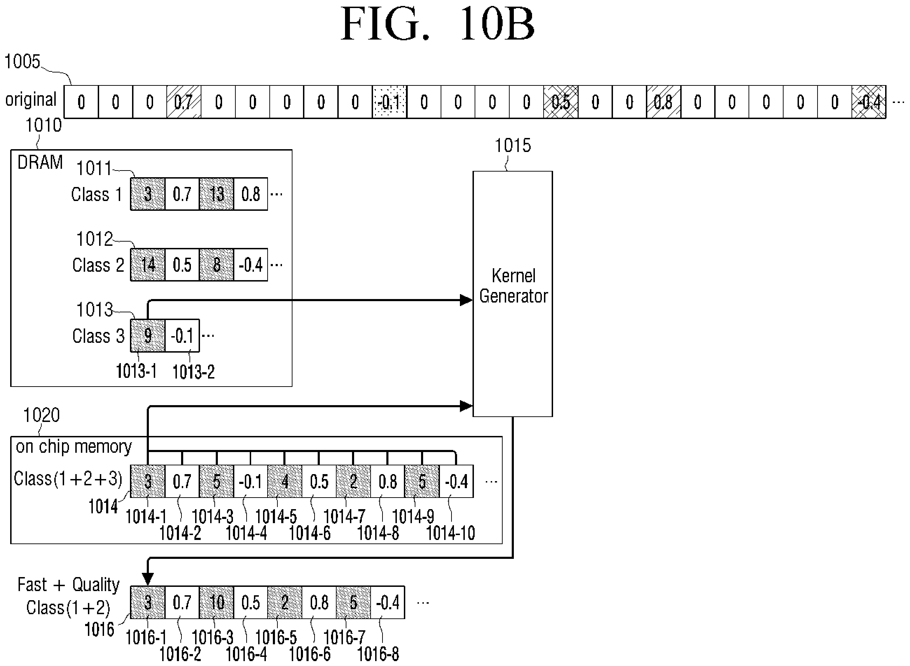

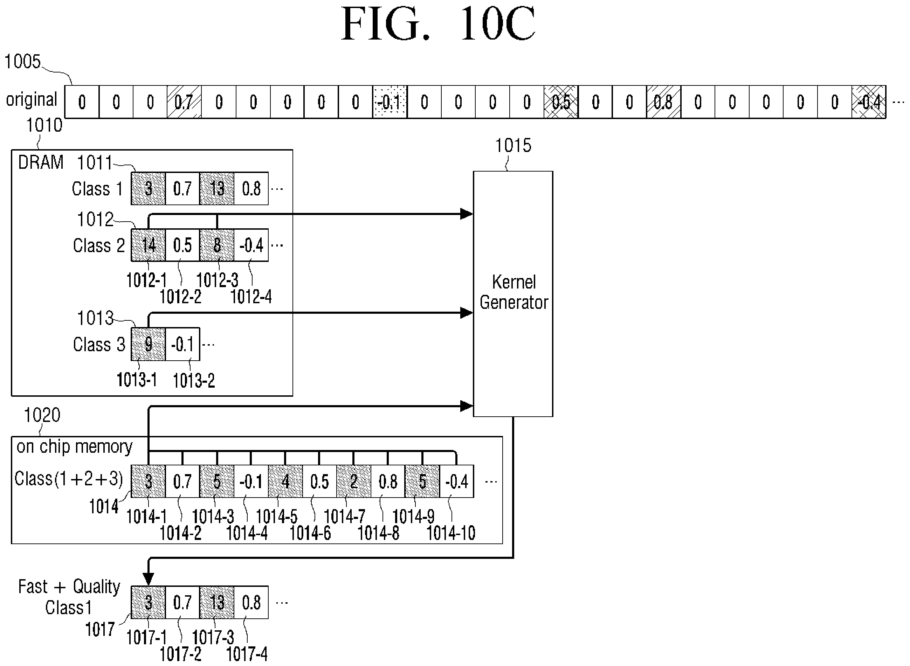

The processor 120 may perform an operation of erasing weights of a specific class among the plurality of classes based on a preset event. Specifically, the processor 120 may erase the weights included in the second class among the weights (weights included in the first class and the second class) included in the third weight information (or the second weight matrix) obtained based on the resource information of the electronic device 100. The processor 120 may use the second index to erase only the weights included in the second class among the plurality of weights. Because the positions of the weights included in the second class may be detected so long as knowing only the second index, only the weights included in the second class may be erased even if the size values (or importance of the weights) of the weights included in the second class are not known. Therefore, the processor 120 may erase the weights included in the second class among the weights (weights included in the first class and the second class) included in the third weight information (or the second weight matrix) obtained based on the third weight information and the second index. In addition, the processor 120 may change an index immediately adjacent to the erased weight among the third indexes. Specifically, if there are two adjacent indexes, the processor 120 may obtain a new index by summing data of each of the two indexes. A detailed calculation process will be described later with reference to FIGS. 10A, 10B, and 10C.

Specifically, the processor 120 may obtain new weight information by erasing the weights included in the second class among the weights (weights included in the first class and the second class) included in the third weight information (or the second weight matrix). Here, the new weight information may correspond to the first weight information.

The processor 120 may obtain output data based on the obtained weight matrix and input data. Specifically, the processor 120 may perform a multiplication operation using the obtained weight matrix and input data, and may obtain the output data as a result of the operation.

According to the disclosure, by enabling scalable operation scenarios for various neural networks, it is possible to maximize user satisfaction and increase competitiveness of mounted products. In addition, according to the disclosure, because it is possible to select an operation point according to power consumption, user satisfaction of an electronic device (e.g., a mobile device) having a low memory capacity may be maximized.

Specifically, according to the disclosure, the class combination may be determined based on the resource information of the electronic device by sorting the weight information into the plurality of classes. Therefore, the artificial intelligence analysis may be performed by appropriately selecting the class combination or generating the new weight matrix even in the situation in which the resources are insufficient.

Meanwhile, in the disclosure, it has been described that a format in which the weights of the electronic device 100 are stored is run length coding (RLC). However, according to an embodiment, the format in which the weights are stored may be a compressed sparse row (CSR) or a compressed sparse column (CSC). The CSC is a method of rearranging in horizontal order in a matrix, and may refer to a method of organizing and compressing rows. The CSR is a method of rearranging in vertical and horizontal orders in a matrix, and may refer to applying the method of organizing the rows to CSR columns.

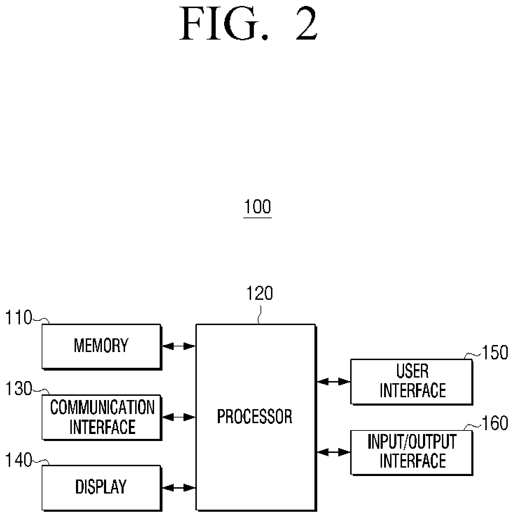

Meanwhile, hereinabove, only a simple configuration of the electronic device 100 is illustrated and described, but various configurations may be additionally provided at the time of implementation. This will be described below with reference to FIG. 2.

FIG. 2 is a block diagram for describing a detailed configuration of the electronic device of FIG. 1.

Referring to FIG. 2, the electronic device 100 may include the memory 110, the processor 120, a communication interface 130, a display 140, a user interface 150, and an input/output interface 160.

Meanwhile, redundant descriptions of the same operations as those described above among the operations of the memory 110 and the processor 120 will be omitted.

The processor 120 generally controls operations of the electronic device 100 by using various programs stored in the memory 110. Specifically, the processor 120 includes a random access memory (RAM), a read only memory (ROM), a main central processing unit (CPU), first to n-th interfaces, and a bus. The RAM, the ROM, the main CPU, the first to n-th interfaces, and the like may be connected to each another through the bus. An instruction set for booting a system, or the like is stored in the ROM. When a turn-on command is input to supply power to the main CPU, the main CPU copies an operating system (O/S) stored in the memory 110 to the RAM according to the instruction stored in the ROM, and executes the O/S to boot the system. When the booting is completed, the main CPU copies various application programs stored in the memory 110 to the RAM, and executes the application programs copied to the RAM to perform various operations. The main CPU accesses the memory 110 to perform the booting using the O/S stored in the memory 110. In addition, the main CPU performs various operations by using various programs, contents, data, and the like stored in the memory 110. The first to n-th interfaces are connected to the various components described above. One of the interfaces may also be a network interface connected to an external device through a network.

The communication interface 130 is a component that performs communication with various types of external devices according to various types of communication methods. The communication interface 130 includes a Wi-Fi module, a Bluetooth module, an infrared communication module, a wireless communication module, and the like. Here, each communication module may be implemented in the form of at least one hardware chip.

The Wi-Fi module and the Bluetooth module perform communication in a Wi-Fi method and a Bluetooth method, respectively. In case of using the Wi-Fi module or the Bluetooth module, various kinds of connection information such as a service set identifier (SSID), a session key, and the like are first transmitted and received, communication is connected using the connection information, and various kinds of information may then be transmitted and received.

The infrared communication module performs communication according to an infrared data association (IrDA) technology that transmits data wirelessly at a short distance by using infrared rays between visible light and millimeter wave.

The wireless communication module may include at least one communication chip that performs communication according to various wireless communication protocols such as Zigbee, 3rd generation (3G), 3rd generation partnership project (3GPP), Long Term Evolution (LTE), LTE Advanced (LET-A), 4th generation (4G), 5th generation (5G), and the like, in addition to the communication methods described above.

In addition, the communication interface 130 may include at least one of a local area network (LAN) module, an Ethernet module, or a wired communication module for performing communication using a pair cable, a coaxial cable, or an optical fiber cable.

According to one example, the communication interface 130 may use the same communication module (e.g., a Wi-Fi module) to communicate with an external device such as a remote controller and an external server.

According to another example, the communication interface 130 may use a different communication module (e.g., a Wi-Fi module) to communicate with an external device such as a remote controller and an external server. For example, the communication interface 130 may use at least one of the Ethernet module or the Wi-Fi module to communicate with the external server, and may use the BT module to communicate with the external device such as the remote controller. However, this is only an example and the communication interface 130 may use at least one communication module among various communication modules when communicating with a plurality of external devices or external servers.

The display 140 may be implemented as various types of displays such as a liquid crystal display (LCD), an organic light emitting diode (OLED) display, a plasma display panel (PDP), and the like. The display 140 may also include a driving circuit, a backlight unit, and the like which may be implemented in the form of an a-si thin film transistor (TFT), a low temperature poly silicon (LTPS) TFT, and an organic TFT (OTFT). Meanwhile, the display 140 may be implemented as a touch screen combined with a touch sensor, a flexible display, a three-dimensional (3D) display, and the like.

In addition, the display 140 may include a bezel housing a display panel as well as the display panel that outputs an image. In particular, according to an embodiment of the disclosure, the bezel may include a touch sensor (not illustrated) for sensing user interaction.

The user interface 150 may be implemented as a device such as a button, a touch pad, a mouse, or a keyboard, or may also be implemented as a touch screen that may also perform the display function described above and a manipulation/input function. Here, the button may be various types of buttons, such as mechanical buttons, touch pads, wheels, and the like, which are formed in arbitrary areas such as a front portion, a side portion, and a back portion of an exterior of a main body of the electronic device 100.

The input/output interface 160 may be any one interface of a high definition multimedia interface (HDMI), a mobile high-definition link (MHL), a universal serial bus (USB), a display port (DP), a thunderbolt, a video graphics array (VGA) port, an RGB port, a D-subminiature (D-SUB), and a digital visual interface (DVI).

The input/output interface 160 may input and output at least one of audio and video signals.

According to an implementation example, the input/output interface 160 may include a port for inputting and outputting only the audio signal and a port for inputting and outputting only the video signal as separate ports, or may be implemented as one port for inputting and outputting both the audio signal and the video signal.

The electronic device 100 may include a speaker (not illustrated). The speaker (not illustrated) may be a component that outputs not only various audio data processed by the input/output interface 160 but also various notification sounds or voice messages.

The electronic device 100 may further include a microphone (not illustrated). The microphone is a component for receiving a user voice or other sounds and converting the user voice or other sounds into audio data.

The microphone (not illustrated) may receive the user voice in an activated state. For example, the microphone may be integrally formed on an upper side, or in a front direction, a side direction, or the like of the electronic device 100. The microphone may include various components such as a microphone for collecting user voice in an analog form, an amplifier circuit for amplifying the collected user voice, an A/D conversion circuit for sampling and converting the amplified user voice into a digital signal, and a filter circuit for removing noise from the converted digital signal.

A camera (not illustrated) is a component for generating a captured image by capturing a subject, where the captured image is a concept including both a moving image and a still image.

The camera (not illustrated) may obtain an image of at least one external device, and may be implemented as a camera, a lens, an infrared sensor, or the like.

The camera (not illustrated) may include a lens and an image sensor. Types of the lens include a general-purpose lens, a wide-angle lens, and a zoom lens, and may be determined according to the type, characteristics, and environment of use of the electronic device 100. As the image sensor, a complementary metal oxide semiconductor (CMOS) and a charge coupled device (CCD) may be used.

The camera (not illustrated) outputs incident light as an image signal. Specifically, the camera (not illustrated) may include a lens, a pixel, and an AD converter. The lens may collect light from the subject and form an optical image in a capturing area, and the pixel may output light incident through the lens as an analog image signal. In addition, the AD converter may convert the analog image signal into a digital image signal and output the converted digital image signal. In particular, the camera (not illustrated) is disposed to capture the front direction of the electronic device 100, and may generate a captured image by capturing a user existing in the front of the electronic device 100.

Meanwhile, in describing the electronic device 100 according to an embodiment of the disclosure, it is described that there is only one camera (not illustrated), but in actual implementation, a plurality of cameras may be disposed. The electronic device 100 may include the plurality of cameras, and may identify a user's head posture by combining images received through the plurality of cameras. Using the plurality of cameras rather than using a single camera may be effective in identifying the user's head posture because it is possible to more accurately analyze a three-dimensional movement.

FIG. 3 is a diagram for describing a zero-skipping operation.

Referring to FIG. 3, the electronic device 100 may process input data using a general method 305 or may process input data based on a zero-skipping method 310.

The general method 305 may be a method of multiplying weight information 306 and input data 307. The general method 305 may not apply any modification to the weight information 306 and may be a method of using an already obtained weight as it is. The weight information 306 may be sorted into data having a weight of 0 and data having a weight of not being 0. The data having the weight of 0 may be sorted into a plurality of groups, and the plurality of groups 306-1, 306-2, and 306-3 may be sorted based on consecutive 0 data. The data having the weight of not being 0 in the weight information may be {0.7,-0.1,0.86}. In addition, the electronic device may multiply the weight information 306 and the input data 307, respectively, according to the general method 305. Here, the electronic device 100 may perform a total of 15 multiplication calculations.

Meanwhile, the zero-skipping method 310 may be a method of skipping data having a weight of 0 in the weight information 306. Here, a skip operation may refer to not performing a calculation process multiplying by zero. For example, the zero-skipping method 310 may use the number of zeros as an index excluding zero weight information from the weight information 306. In addition, the zero-skipping method 310 may obtain the number of zeros included in each of the groups 306-1, 306-2, and 306-3. The number of zeros in the plurality of groups 306-1, 306-2, and 306-3 may be 3, 5, and 4. In addition, information on the number of zeros may be used as an index. For example, the electronic device 100 may use the information on the number of zeros in the plurality of groups 306-1, 306-2, and 306-3 as indexes 311-1, 311-2, and 311-3. The index 311-1 of a first group 306-1 may refer to the number (three) of skipped input data (12, 2, and 9). In addition, the index 311-2 of a second group 306-2 may refer to the number (five) of skipped input data (45, 6, 23, 3, and 12). In addition, the index 311-3 of a third group 306-3 may refer to the number (four) of skipped input data (9, 1, 45, and 6). In addition, the zero-skipping method 310 may multiply input data (1, 2, and 23) for data (0.7, -0.1, and 0.86) having the weight of not being 0 among the weight information 306, respectively. As a result, the electronic device 100 may obtain weight information corresponding to {3, 0.7, 5, -0.1, 4, 0.86} based on the weight information 306 by the zero-skipping operation. In addition, here, "3, 5, and 4" may be the indexes and "0.7, -0.1, and 0.86" may be the weights.

The electronic device 100 needs to perform a total of 15 calculation processes according to the general method 305, but needs to perform a total 3 calculation processes according to the zero-skipping method 310, thereby making it possible to simplify the calculation process.

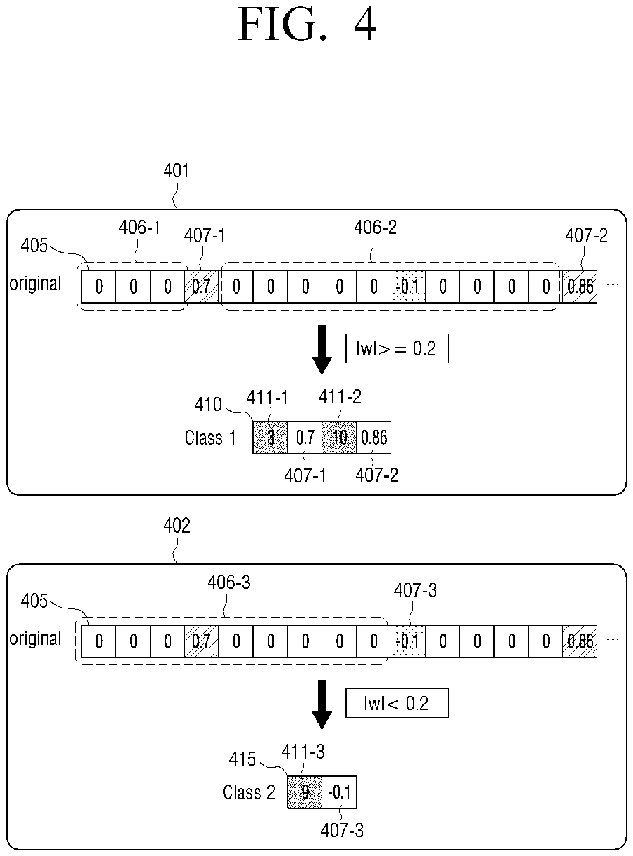

FIG. 4 is a diagram for describing a zero-skipping operation.

Referring to FIG. 4, the electronic device 100 may perform a zero-skipping operation based on a size value of a weight (or importance of a weight). The electronic device 100 may perform a zero-skipping operation (401) by obtaining only a weight having the size value of the weight (or the importance of the weight) is a threshold value or more, or may perform a zero-skipping operation (402) by obtaining only a weight having the size value of the weight (or the importance of the weight) less than the threshold value.

In relation to the operation 401, the electronic device 100 may sort weight information 405 into data having a weight of 0 and data (0.7, -0.1, and 0.86) having a weight of being not 0. In addition, the electronic device 100 may identify weights (0.7 and 0.86) of a threshold value (e.g., 0.2) or more from the data (0.7, -0.1, and 0.86) having the weight of being not 0. The electronic device 100 may determine the weight (-0.1) smaller than the threshold value (0.2) among the data having the weight of being not 0 as equal to 0. In addition, the electronic device 100 may sort the weight information 405 into data groups 406-1 and 406-2 having the weight of 0 and data groups 407-1 and 407-2 having the weight of being not 0. In addition, as described in FIG. 3, the electronic device 100 may identify the number of zeros in each of the data groups having the weight of 0. The number of zeros corresponding to the group 406-1 is three, and the number of zeros corresponding to the group 406-2 is ten. Here, the electronic device 100 may calculate the number of zeros by including the weight smaller than the threshold value (0.2) in the number of zeros. For example, "-0.1" is not 0, but if the weight is smaller than 0.2, the data is determined as 0, and therefore, the number of zeros may be calculated by including "-0.1" in the number of zeros.

In relation to the operation 401, the electronic device 100 may use the obtained number of zeros as an index. The number of zeros corresponding to the group 406-1 is three, and the electronic device 100 may use the obtained number (three) of zeros as an index 411-1 corresponding to the group 406-1. In addition, the number of zeros corresponding to the group 406-2 is ten, and the electronic device 100 may use the obtained number (ten) of zeros as an index 411-2 corresponding to the group 406-2.

In relation to the operation 401, the electronic device 100 obtains first weight information 410 based on the weight information 405, a preset threshold value, and the obtained indexes 411-1 and 411-2. The first weight information 410 includes the indexes 411-1 and 411-2, the weights 407-1 and 407-2, and order information (411-1, 407-1, 411-2, and 407-2 in the order).

Both the weight information 405 and the first weight information 410 may correspond to information related to the weight. However, for convenience of explanation, an original weight may be described as the weight information 405, and the weight changed by the zero-skipping operation may be described as the first weight information 410.

The operation 401 describes a process of obtaining the first weight information 410 by performing the zero-skipping operation from the weight information 405 when the size value of the weight is the threshold value (0.2) or more.

In relation to the operation 402, the electronic device 100 obtains second weight information 415 by performing the zero-skipping operation from the weight information 405 when the size value of the weight is less than the threshold value (0.2).

In relation to the operation 402, the electronic device 100 may sort weight information 405 into data having a weight of 0 and data (0.7, -0.1, 0.86) having a weight of being not 0. In addition, the electronic device 100 may identify a weight (-0.1) less than the threshold value (e.g., 0.2) from the data (0.7, -0.1, 0.86) having the weight of being not 0. The electronic device 100 may determine the weights (0.7 and 0.86) of the threshold value (0.2) or more among the data having the weight of being not 0 as equal to 0. Here, the electronic device 100 may not determine weights after the weight (-0.1) less than the threshold value 0.2 identified at the last position among the data having the weight of being not 0. Because the weight (0.86) is already reflected by the operation 401, the weights after the finally identified weight (-0.1) may not be determined and ignored, and not included in the second weight information 415. In addition, the electronic device 100 may sort the weight information 405 into data group 406-3 having the weight of 0 and data group 407-3 having the weight of being not 0. In addition, as described in FIG. 3, the electronic device 100 may identify the number of zeros in each of the data groups having the weight of 0. The number of zeros corresponding to the group 406-3 is nine. Here, the electronic device 100 may calculate the number of zeros by including the weight of the threshold value (0.2) or more in the number of zeros. For example, "0.7" is not 0, but if the weight is 0.2 or more, the data is determined as 0, and therefore, the number of zeros may be calculated by including "0.7" in the number of zeros.

In relation to the operation 402, the electronic device 100 may use the obtained number of zeros as an index. The number of zeros corresponding to the group 406-3 is nine, and the electronic device 100 may use the obtained number (nine) of zeros as an index 411-3 corresponding to the group 406-3.

In relation to the operation 402, the electronic device 100 obtains second weight information 415 based on the weight information 405, a preset threshold value, and the obtained index 411-3. The second weight information 415 includes the index 411-3, a weight 407-3, and order information (411-3 and 407-3 in the order).

The electronic device 100 may sort the weight information 405 into a plurality of classes. Here, the class may refer to a unit for sorting a plurality of weights used for artificial intelligence analysis. The classes may be sorted based on the size value of the weight (or the importance of the weight). For example, it is assumed that 100 weights are used for artificial intelligence analysis. Weights having a weight value of a threshold value or more among the 100 weights may be allocated to a first class, and weights having the weight value less than the threshold value may be allocated to a second class. Meanwhile, the number of classes, the number of threshold values, and the threshold value may vary according to embodiments.

For example, the first class may refer to information related to the first weight information 410 obtained according to a first weight size criterion (e.g., the size value of the weight is 0.2 or more), and the second class may refer to information related to the second weight information 415 obtained according to a second weight size criterion (e.g., the size value of the weight is less than 0.2).

The electronic device 100 obtains the first and second weight information 410 and 415 corresponding to the plurality of classes. The first weight information 410 may be information obtained by grouping data having a relatively large weight, and the second weight information 415 may be information obtained by grouping data having a small weight. Because the use of both the first weight information 410 and the second weight information 415 is to use the entire weight information 405, the accuracy of the calculation may be maintained. However, in the case in which the resources of the electronic device 100 are insufficient, because both the first weight information 410 and the second weight information 415 may not be used, the calculation operation may be performed using only the first weight information 410. When only the first weight information 410 having a relatively large weight value is used, the accuracy may be slightly deteriorated, but the calculation processing operation may be normally performed.

FIG. 5A is a diagram for describing an operation of obtaining a weight matrix based on the information generated by the zero-skipping operation of FIG. 4.

Referring to FIG. 5A, weight information 505 may correspond to the weight information 405 of FIG. 4, and weight information 510 and 515 may correspond to the first and second weight information 410 and 415 of FIG. 4. Therefore, redundant descriptions of the weight information 505 and the weight information 510 and 515 corresponding to a plurality of classes are omitted.

The electronic device 100 may store the obtained weight information 510 and 515 in a DRAM 501 and transmit the weight information 510 and 515 to a kernel generator 520 as needed.

The kernel generator 520 may be a kernel generation module, and generates new weight information based on at least one received weight information. For example, the kernel generator 520 may generate new weight information 525 corresponding to a new class based on first weight information 510 corresponding to a first class and second weight information 515 corresponding to a second class. Here, the kernel generator 520 may use the following predefined code information to generate the new weight information 525. The predefined code information may be a code related to an operation of processing data using a stack structure. Meanwhile, the kernel generator 520 may be a parameter generator.

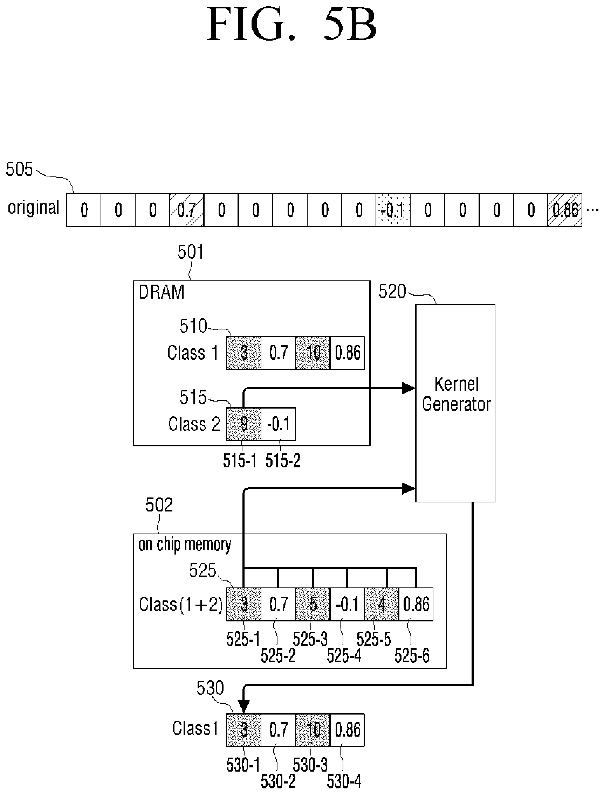

Here, the new weight information 525 generated by the kernel generator 520 may be the same as the weight information obtained by the zero-skipping operation in FIG. 3. There is a difference in that the weight information disclosed in FIG. 3 is obtained by performing the zero-skipping operation on the weight information 306, and the weight information 525 disclosed in FIG. 5 is obtained based on the weight information 510 and 515 corresponding to the plurality of classes. Therefore, according to the method of FIG. 3, it is not possible to obtain the new weight information 525 by combining the weight information 510 and 515 corresponding to the plurality of classes. Therefore, the kernel generator 520 may generate one integrated weight information by combining the separated weight information.

Meanwhile, the operation disclosed in FIG. 5A may be performed through the following code.

```
  while (not empty) {
  for (all classes) {
  skip_count = pop (class_id, SKIP);
  if (skip_count < count_min) {
  count_min = skip_count;
  class_sel = class_id;
  }
  push (class_id, SKIP, skip_count);
  }
  for (every classes) {
  if (class_id != class_sel) {
  skip_count = pop (class_id, SKIP);
  skip_count -= (count_min + 1);
  push (class_id, SKIP, skip_count);
  }
  }
  skip_count = pop (class_sel, SKIP);
  kernel_val = pop (class_sel, KERNEL);
  store (skip_count, kernel_val);
  }
 
```

FIG. 5B is a diagram for describing an operation of another example of obtaining a weight matrix.

Referring to FIG. 5B, the electronic device 100 may store the weight information 510 and 515 for each class in the DRAM 501 and store the new weight information 525 generated by the kernel generator 520 an on-chip memory 502. Here, the weight information 510 may be first weight information corresponding to the first class, and the weight information 515 may be second weight information corresponding to the second class. In addition, the weight information 525 may be weight information newly generated by combining the first class and the second class. Here, according to an embodiment, the user may perform an operation of newly generating the weight information corresponding to the first class in the on-chip memory 502. Here, the weight information 525 may include indexes 525-1, 525-3, and 525-5 and weights 525-2, 525-4, and 525-6 corresponding to the indexes 525-1, 525-3, and 525-5.

According to an embodiment, in order to generate the weight information corresponding to the first class, the kernel generator 520 may receive the weight information 525 generated by combining the first class and the second class from the on-chip memory 502, and receive the second weight information 515 corresponding to the second class.

Here, the weight information 515 includes an index 515-1 and a weight 515-2 corresponding to the index 515-1. As an example, the kernel generator 520 may receive only the index 515-1 of the weight information 515 from the DRAM 501. Because the information about the weight is already stored in the on-chip memory 502, only the index 515-1 may be received without separately receiving the weight 515-2. In addition, the kernel generator 520 generates weight information 530 corresponding to the first class based on the received index 515-1 and the received weight information 525. The weight information 530 includes indexes 530-1 and 530-3 and weights 530-2 and 530-4 corresponding to the indexes 530-1 and 530-3. In addition, the kernel generator 520 may erase a weight corresponding to "9" corresponding to the received index 515-1 from the weight information 525. The calculation may be performed by adding a value of the index itself of the weight information 525 and converting a portion corresponding to the weight into "1". Specifically, the kernel generator 520 may check the number 9 by adding "3" of the index 525-1, the converted value "1" of the weight 525-2, and "5" of the index 525-3, and may erase "-0.1" of the weight 525-4, which is a later value. The kernel generator 520 may obtain "10" by adding all of "5" of the index 525-5, the converted value "1" of the erased weight 525-4, and "4" of the index 525-5, and "10" may be used as a new index 530-3.

According to another embodiment, the kernel generator 520 may erase the weight information 525 stored in the on-chip memory 502, and receive the first weight information corresponding to the first class from the DRAM 501. The first weight information 510 may be the same as the newly generated weight information 530.

Meanwhile, the operations disclosed in FIG. 5B may be performed using the code described in FIG. 5A. The redundant description of the code is omitted.

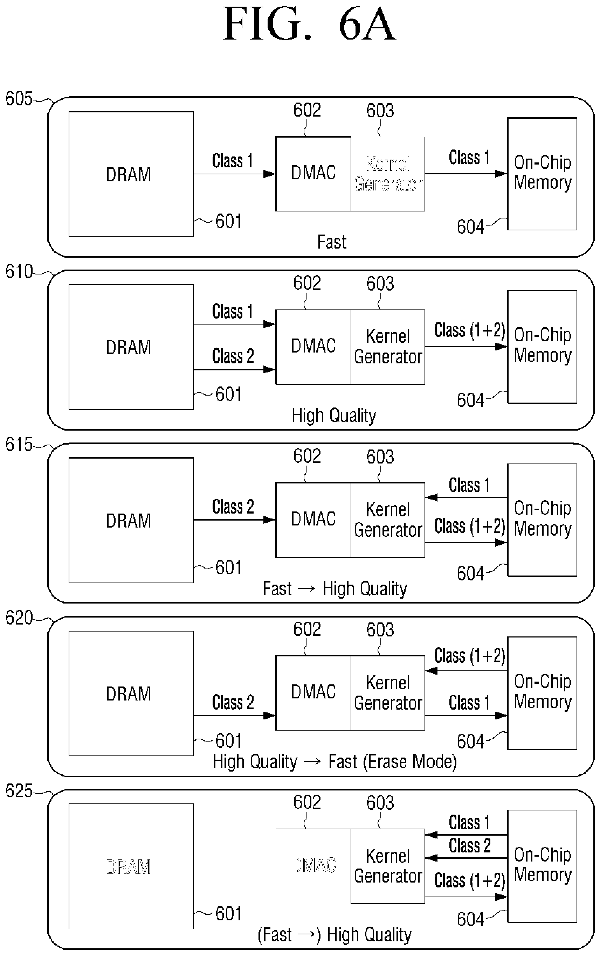

FIG. 6A is a diagram for describing various examples of obtaining a weight matrix.

Referring to FIG. 6A, the electronic device 100 may include at least one of a DRAM 601, a direct memory access controller (DMAC) 602, a kernel generator 603, or an on-chip memory 604. In addition, the electronic device 100 may obtain final weight information based on at least one of the above-described plurality of components, and perform artificial intelligence analysis based on the final weight information.

The electronic device 100 may perform an operation of generating or changing weight information according to diverse examples.

In a first example 605, it is assumed that the weight information corresponding to the first class is stored in the DRAM 601 and artificial intelligence analysis is performed using only the weight information corresponding to the first class. Because the electronic device 100 performs the artificial intelligence analysis using only the weight information corresponding to the first class, a separate operation of generating or changing the weight information may not be required. Therefore, it is not necessary to generate new weight information by the kernel generator 603. The electronic device 100 may transmit the weight information corresponding to the first class stored in the DRAM 601 to the DMAC 602, and directly transmit the weight information corresponding to the first class transmitted to the DMAC 602 to the on-chip memory 604. In addition, the electronic device 100 may perform the artificial intelligence analysis by using the weight information corresponding to the first class transmitted to the on-chip memory 604. A data processing method according to the first example 605 may be used when a fast data processing speed is required.

In a second example 610, it is assumed that the weight information corresponding to the first class and the weight information corresponding to the second class are stored in the DRAM 601 and artificial intelligence analysis is performed using both the weight information corresponding to the first class and the weight information corresponding to the second class. Because only the weight information corresponding to the first class and the weight information corresponding to the second class are stored in the DRAM 601 and there is no integrated weight information obtained by combining the first class and the second class, the electronic device 100 generates the integrated weight information. In order to generate the integrated weight information, the electronic device 100 transmits the weight information corresponding to the first class and the weight information corresponding to the second class stored in the DRAM 601 to the DMAC 602, and the DMAC 602 transmits the weight information corresponding to the first class and the weight information corresponding to the second class back to the kernel generator 603. The kernel generator 603 may generate new weight information (integrated weight information) based on the received weight information corresponding to the first class and the received weight information corresponding to the second class. In addition, the electronic device 100 may transmit the integrated weight information generated by the kernel generator 603 to the on-chip memory 604, and perform artificial intelligence analysis based on the integrated weight information transmitted to the on-chip memory 604. A data processing method according to the second example 610 may be used when a high quality data analysis result is required.

In a third example 615, it is assumed that the weight information corresponding to the second class is stored in the DRAM 601, the weight information corresponding to the first class is stored in the on-chip memory 604, and artificial intelligence analysis is performed using both the weight information corresponding to the first class and the weight information corresponding to the second class. Here, because the electronic device 100 has not obtained weight information obtained by combining the first class and the second class as a result, the electronic device 100 needs to generate the integrated weight information. Therefore, the electronic device 100 transmits the weight information corresponding to the second class stored in the DRAM 601 to the DMAC 602, and transmits the weight information corresponding to the second class transmitted to the DMAC 602 to the kernel generator 603. In addition, the electronic device 100 transmits the weight information corresponding to the first class stored in the on-chip memory 604 to the kernel generator 603. In addition, the electronic device 100 generates the integrated weight information based on the weight information corresponding to the first class and the weight information corresponding to the second class through the kernel generator 603. In addition, the electronic device 100 may transmit the generated integrated weight information from the kernel generator 603 to the on-chip memory 604. In addition, the electronic device 100 may perform artificial intelligence analysis based on the integrated weight information transmitted to the on-chip memory 604. A data processing method according to the third example 615 may be used when changing from the fast data processing method to the high quality data processing method.

In a fourth example 620, it is assumed that the weight information corresponding to the second class is stored in the DRAM 601, the integrated weight information corresponding to both the first class and the second class is stored in the on-chip memory 604, and artificial intelligence analysis is performed using only the weight information corresponding to the first class. Currently, because only the integrated weight information is stored in the on-chip memory 604, the electronic device 100 needs to generate the weight information corresponding to the first class by the kernel generator 603. Therefore, the electronic device 100 transmits the integrated weight information from the on-chip memory 604 to the kernel generator 603. In addition, the electronic device 100 transmits the weight information corresponding to the second class from the DRAM 601 to the DMAC 602, and transmits the transmitted weight information corresponding to the second class to the kernel generator 603. The electronic device 100 generates the weight information corresponding to the first class based on the integrated weight information and the weight information corresponding to the second class. Because the integrated weight information includes both the weight information corresponding to the first class and the weight information corresponding to the second class, the electronic device 100 may perform an operation of erasing only the weight information corresponding to the second class from the integrated weight information. The kernel generator 603 may correspond to an erase mode in that the kernel generator 603 performs a data erasing operation. In addition, the electronic device 100 may perform the artificial intelligence analysis by using only the weight information corresponding to the first class generated by the kernel generator 603. A data processing method according to the fourth example 620 may be used when changing from the high quality data processing method to the fast data processing method.

In a fifth example 625, it is assumed that the weight information corresponding to the first class and the weight information corresponding to the second class are stored in the on-chip memory 604, respectively, and artificial intelligence analysis is performed using both the weight information corresponding to both the first class and the second class. The electronic device 100 transmits the weight information corresponding to the first class and the weight information corresponding to the second class from the on-chip memory 604 to the kernel generator 603 to generate the integrated weight information. In addition, the electronic device 100 generates the integrated weight information based on the weight information corresponding to the first class and the weight information corresponding to the second class through the kernel generator 603. In addition, the electronic device 100 transmits the integrated weight information generated by the kernel generator 603 to the on-chip memory 604. In addition, the electronic device 100 may perform the artificial intelligence analysis based on the integrated weight information. A data processing method according to the fifth example 625 may be used when changing from the fast data processing method to the high quality data processing method.

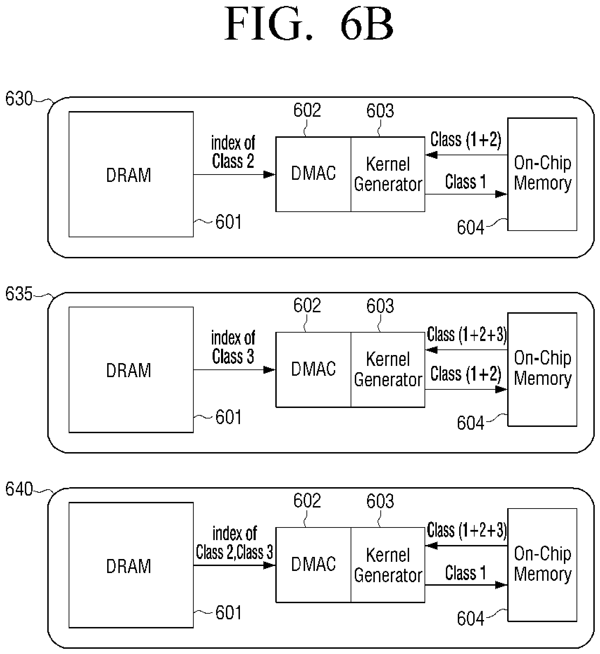

FIG. 6B is a diagram for describing other examples of obtaining the weight matrix.

Referring to FIG. 6B, as described in FIG. 6A, the electronic device 100 may include at least one of the DRAM 601, the direct memory access controller (DMAC) 602, the kernel generator 603, or the on-chip memory 604.

A sixth example 630 may be an example in which the weight information corresponding to the second class is stored in the DRAM 601, the integrated weight information corresponding to both the first class and the second class is stored in the on-chip memory 604, and artificial intelligence analysis is performed using only the weight information corresponding to the first class, similarly to the fourth example 620. However, the kernel generator 603 of the sixth example 630 may receive not all weight information corresponding to the second class from the DRAM 601 but only an index. Because the weight of the weight information corresponding to the second class is already received from the on-chip memory 604, only the index may be received from the DRAM 601 excluding the weight. Specific operations related thereto have been described with reference to FIG. 5B.

A seventh example 635 may be an example in which weight information corresponding to a third class is stored in the DRAM 601, integrated weight information corresponding to all the first class, the second class, and the third class is stored in the on-chip memory 604, and artificial intelligence analysis is performed using only the weight information corresponding to the first class and the second class. Currently, because only the integrated weight information is stored in the on-chip memory 604, the electronic device 100 needs to generate the weight information corresponding to the first class and the second class by the kernel generator 603. Therefore, the electronic device 100 may perform control to transmit the integrated weight information from the on-chip memory 604 to the kernel generator 603. In addition, the electronic device 100 may perform control to transmit only an index of the weight information corresponding to the third class stored in the DRAM 601 to the kernel generator 603 through the DMAC 602. In addition, the kernel generator 603 may generate new weight information by using the received integrated weight information and index. A specific operation related thereto will be described later with reference to FIG. 10B.

An eighth example 640 may be an example in which the weight information corresponding to the second class and the weight information corresponding to the third class are stored in the DRAM 601, the integrated weight information corresponding to all the first class, the second class, and the third class is stored in the on-chip memory 604, and artificial intelligence analysis is performed using only the weight information corresponding to the first class. Currently, because only the integrated weight information is stored in the on-chip memory 604, the electronic device 100 needs to generate the weight information corresponding to the first class by the kernel generator 603. Therefore, the electronic device 100 may perform control to transmit the integrated weight information from the on-chip memory 604 to the kernel generator 603. In addition, the electronic device 100 may perform control to transmit only an index of the weight information corresponding to the second class and an index of the weight information corresponding to the third class, which are stored in the DRAM 601, to the kernel generator 603 through the DMAC 602. In addition, the kernel generator 603 may generate new weight information by using the received integrated weight information and index. A specific operation related thereto will be described later with reference to FIG. 10C.

FIG. 7 is a diagram for describing a general method 705, a pruning operation 710, and a zero-skipping operation 715.

Referring to FIG. 7, the electronic device 100 may multiply weight information 706 and input data 707 according to a general method 705. The general method 705 may not apply any modification to the weight information 706 and may be a method of using an already obtained weight as it is.

Meanwhile, the electronic device 100 may change the weight information 706 in consideration of information on a weight size in the weight information 706. Specifically, the electronic device 100 may perform a pruning operation 710. The pruning operation 710 may be an operation of changing a weight to 0 when a size of the weight is a threshold value or less. For example, it is assumed that the threshold value is 0.09. The electronic device 100 may change a weight having a size value thereof of the threshold value (0.09) or less to 0. The electronic device 100 may group weights having the size of the weight of the threshold value (0.09) or less in the weight information 706 into successive weights, and may obtain a plurality of groups 706-1, 706-2, and 706-3. In addition, the electronic device 100 may change the weights included in each of the plurality of groups 706-1, 706-2, and 706-3 to 0. Such a pruning operation 710 may have the purpose of simplifying a calculation process by changing weights of a certain size or less to 0. As a result, the electronic device 100 may obtain weight information 711 changed through the pruning operation 710. In addition, the electronic device 100 may multiply the changed weight information 711 and the input data 707. The general method 705 and the calculation method by the pruning operation 710 have the same number of times of calculations, but in the calculation method by the pruning operation 710, because the number of times 0 is multiplied is large, the calculation process may be simplified and the processing speed may be improved.

Meanwhile, the electronic device 100 may perform a zero-skipping operation 715 on the changed weight information 711 generated by the pruning operation 710. Because the zero-skipping operation has been described with reference to FIG. 3, a redundant description is omitted. The electronic device 100 may generate weight information 716 by performing the zero-skipping operation 715 on the changed weight information 711, and the weight information 716 may include indexes 3, 5, and 4, weights 0.7, -0.1, and 0.86, and order information 3, 0.7, 5, - 0.1, 4, and 0.86.

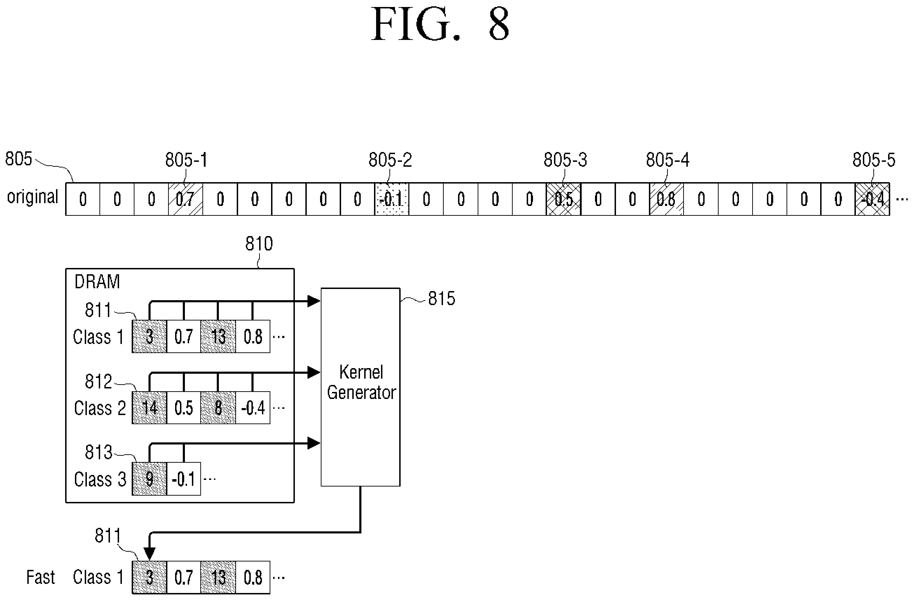

FIG. 8 is a diagram for describing an example of obtaining weight information.

Referring to FIG. 8, the electronic device 100 may obtain a plurality of classes obtained by sorting weight information 805 according to a preset criterion and weight information corresponding to each of the plurality of classes. Because the operation of obtaining the plurality of classes and the weight information corresponding to the plurality of classes has been described in detail with reference to FIG. 4, a redundant description will be omitted.

Here, the weight information 805 may correspond to result data on which the pruning operation has already been performed. The weight information 805 may include data having a weight of 0 and data 805-1, 805-2, 805-3, 805-4, and 805-5 having a weight of not being 0.

Here, the electronic device 100 may sort the weight information 805 into three classes. A first threshold value and a second threshold value may be pre-stored to sort the three classes. The electronic device 100 may determine that the weight corresponds to the first class when a size value of the weight (or the importance of the weight) is the first threshold value or more, determine that the weight corresponds to the second class when the size value of the weight (the important of the weight) is the second threshold or more and less than the first threshold value, and determine the weight corresponds to the third class when the size value of the weight (the important of the weight) is less than the second threshold value.

For example, it is assumed that the first threshold value is 0.6 and the second threshold value is 0.3. Because the size value of each of the weight (0.7) 805-1 and the weight (0.8) 805-4 is the first threshold value (0.6) or more, the electronic device 100 may determine that the weight (0.7) 805-1 and the weight (0.8) 805-4 correspond to the first class. In addition, because the size value of each of the weight (0.5) 805-3 and the weight (-0.4) 805-5 is the second threshold value (0.3) or more and less than the first threshold value (0.6), the electronic device 100 may determine that the weight (0.5) 805-3 and the weight (-0.4) 805-5 correspond to the second class. In addition, because the size value of the weight (-0.1) 805-2 is less than the second threshold value (0.3), the electronic device 100 may determine that the weight (-0.1) 805-2 corresponds to the third class. The first class may be a group of the weights having the highest size value, and the third class may be a group of the weights having the lowest size value.

The electronic device 100 obtains weight information corresponding to each of the classes. Specifically, the electronic device 100 obtains weight information 811 corresponding to the first class, weight information 812 corresponding to the second class, and weight information 813 corresponding to the third class. The weight information 811 corresponding to the first class may be obtained by considering weights excluding the weights 805-1 and 805-4 determined as the first class as 0. The weight information 812 corresponding to the second class may be obtained by considering weights excluding the weights 805-3 and 805-5 determined as the second class as 0. The weight information 813 corresponding to the third class may be obtained by considering weights excluding the weight 805-2 determined as the third class as 0.

Meanwhile, the weight information corresponding to each class may not include the number of zeros disposed after the last weight of each class. For example, the weight information 811 corresponding to the first class may include only data up to the last weight 805-4, and the weight information 813 corresponding to the third class may include only data up to the last weight 805-2.

Meanwhile, because the method of obtaining weight information corresponding to each class has been described with reference to FIG. 4, a redundant description is omitted.

The electronic device 100 may include at least one of a DRAM 810 or a kernel generator 815. The electronic device 100 may store the weight information 811 corresponding to the first class, the weight information 812 corresponding to the second class, and the weight information 813 corresponding to the third class in the DRAM 810. In addition, the electronic device 100 may perform artificial intelligence analysis by using at least one of the weight information 811 corresponding to the first class, the weight information 812 corresponding to the second class, or the weight information 813 corresponding to the third class, as needed.

In FIG. 8, it is assumed that the artificial intelligence analysis is performed using only the weight information 811 corresponding to the first class. The electronic device 100 may perform the artificial intelligence analysis by using only the weight information 811 corresponding to the first class among a plurality of weight information stored in the DRAM 810. Here, the electronic device 100 transmits the weight information 811 corresponding to the first class to the kernel generator 815. However, because the DRAM 810 itself already includes the weight information 811 corresponding to the first class, it may not be necessary to generate new weight information. Because the kernel generator 815 does not need to perform a separate combining operation, the data processing method according to the example disclosed in FIG. 8 may be used when a fast data processing speed is required.

Meanwhile, the example of performing the artificial intelligence analysis by using only the weight information 811 corresponding to the first class in FIG. 8 may be an example similar to the first example 605 of FIG. 6A. However, the example disclosed in FIG. 8 may be an example sorted into three classes unlike the first example 605 of FIG. 6A.

FIG. 9 is a diagram for describing an example of generating weight information.

Referring to FIG. 9, weight information 905 may correspond to the weight information 805 of FIG. 8. In addition, weight information 911 corresponding to the first class, weight information 912 corresponding to the second class, and weight information 913 corresponding to the third class may correspond to the weight information 811, 812, and 813 of FIG. 8, respectively. Therefore, a redundant description is omitted.

In an example of FIG. 9, it is assumed that the weight information 911 corresponding to the first class, the weight information 912 corresponding to the second class, the weight information 913 corresponding to the third class are stored in the DRAM 601 and artificial intelligence analysis is performed using all of the weight information corresponding to the first class, the second class, and the third class. Here, new weight information obtained by integrating all of the weight information corresponding to the first class, the second class, and the third class may be described as integrated weight information 914.

The electronic device 100 transmits each of the weight information 911, 912, and 913 stored in the DRAM 910 to a kernel generator 915 to combine the weight information 911 corresponding to the first class, the weight information 912 corresponding to the second class, and the weight information 913 corresponding to the third class, and the kernel generator 915 may generate the integrated weight information 914 based on each of the weight information 911, 912, and 913. Here, the kernel generator 915 may use predefined code information to generate the integrated weight information 914. The predefined code information may be a code related to an operation of processing data using a stack structure. A data processing method according to the example disclosed in FIG. 9 may be used when a high quality is requested for a data analysis result.

Meanwhile, the example of performing the artificial intelligence analysis by using the integrated weight information 914 in FIG. 9 may be an example similar to the second example 610 of FIG. 6A. However, the example disclosed in FIG. 9 may be an example sorted into three classes unlike the second example 610 of FIG. 6A.

Meanwhile, the operations disclosed in FIG. 9 may be performed using the code described in FIG. 5A. The redundant description of the code is omitted.

FIG. 10A is a diagram for describing another example of generating weight information.

Referring to FIG. 10A, weight information 1005 may correspond to the weight information 805 of FIG. 8. In addition, weight information 1011 corresponding to the first class, weight information 1012 corresponding to the second class, and weight information 1013 corresponding to the third class may correspond to the weight information 811, 812, and 813 of FIG. 8, respectively. In addition, integrated weight information 1014 corresponding to all of the first class, the second class, and the third class may correspond to the integrated weight information 914 of FIG. 9. Therefore, a redundant description of FIGS. 8 and 9 will be omitted.

In an example of FIG. 10A, it is assumed that the weight information 1011 corresponding to the first class, the weight information 1012 corresponding to the second class, and the weight information 1013 corresponding to the third class are stored in the DRAM 1010 and the integrated weight information 1014 is stored in an on-chip memory 1020. In addition, in the example of FIG. 10A, it is assumed that the artificial intelligence analysis is performed using the weight information corresponding to the first class and the second class. Here, the weight information 1013 includes an index 1013-1 and a weight 1013-2 corresponding to the index 1013-1. In addition, the weight information 1014 may include indexes 1014-1, 1014-3, 1014-5, 1014-7, and 1014-9 and weights 1014-2, 1014-4, 1014-6, 1014-8, and 1014-10 corresponding to the indexes 1014-1, 1014-3, 1014-5, 1014-7, and 1014-9. The integrated weight information may refer to weight information in which all of the first class, the second class, and the third class are included.

According to an example of FIG. 10A, the electronic device 100 stores only the weight information 1011 corresponding to the first class, the weight information 1012 corresponding to the second class, the weight information 1013 corresponding to the third class, and the integrated weight information 1014, but may not store weight information corresponding to the first class and the second class. Therefore, the electronic device 100 generates weight information 1016 corresponding to the first class and the second class through a kernel generator 1015. Here, the weight information 1016 may include indexes 1016-1, 1016-3, 1016-5, and 1016-7 and weights 1016-2, 1016-4, 1016-6, and 1016-8 corresponding to the indexes 1016-1, 1016-3, 1016-5, and 1016-7.

Here, the kernel generator 1015 receives both the index 1013-1 and the weight 1013-2 corresponding to the index 1013-1 among the weight information 1013 corresponding to the third class from the DRAM 1010. In addition, the kernel generator 1015 may receive the indexes 1014-1, 1014-3, 1014-5, 1014-7, and 1014-9 and the weights 1014-2, 1014-4, 1014-6, 1014-8, and 1014-10 corresponding to the indexes 1014-1, 1014-3, 1014-5, 1014-7, and 1014-9 among the integrated weight information 1014 from the on-chip memory 1020.

Here, the kernel generator 1015 generates the weight information 1016 corresponding to the first class and the second class based on the integrated weight information 1014 and the weight information 1013 corresponding to the third class. Because the integrated weight information 1014 includes all of the weight information 1011 corresponding to the first class, the weight information 1012 corresponding to the second class, and the weight information 1013 corresponding to the third class, the electronic device 100 may perform an operation of erasing only the weight information corresponding to the third class from the integrated weight information 1014. The kernel generator 1015 may correspond to an erase mode in that the kernel generator 1015 performs a data erasing operation. In addition, the electronic device 100 may perform the artificial intelligence analysis by using only the weight information 1016 corresponding to the first class and the second class generated by the kernel generator 1015. A data processing method according to the example of FIG. 10A may be used when a fast data processing speed and a high quality data analysis result are required.

FIG. 10B is a diagram for describing an operation of applying another calculation process in the example of FIG. 10A.

Referring to FIG. 10B, the kernel generator 1015 may not receive the weight 1013-2 from the DRAM 1010 while performing the same operation as in FIG. 10A. Specifically, the kernel generator 1015 may receive only the index 1013-1 from the DRAM 1010. As a result, only an operation of subtracting the weight in the process of generating the new weight information 1016 may be performed. Therefore, the kernel generator 1015 may find a position of the weight (-0.1) to be erased only by the index 1013-1. Therefore, unlike the example of FIG. 10A, the kernel generator 1015 may receive only the index 1013-1 of the weight information 1013 from the DRAM 1010.

Because the remaining operations of FIG. 10B may correspond to those of FIG. 10A, redundant descriptions are omitted.

FIG. 10C is a diagram for describing still another example of generating weight information.

Referring to FIG. 10C, the DRAM 1010 includes the weight information 1011 corresponding to the first class, the weight information 1012 corresponding to the second class, and the weight information 1013 corresponding to the third class. Here, the weight information 1012 includes indexes 1012-1 and 1012-3 and weights 1012-2 and 1012-4 corresponding to the indexes 1012-1 and 1012-3. In addition, the weight information 1013 includes an index 1013-1 and a weight 1013-2 corresponding to the index 1013-1.

The kernel generator 1015 may receive only the indexes 1012-1 and 1012-3 of the weight information 1012 and the index 1013-1 of the weight information 1013 from the DRAM 1010. In addition, the kernel generator 1015 may receive the indexes 1014-1, 1014-3, 1014-5, 1014-7, and 1014-9 and the weights 1014-2, 1014-4, 1014-6, 1014-8, and 1014-10 corresponding to the indexes 1014-1, 1014-3, 1014-5, 1014-7, and 1014-9 among the integrated weight information 1014 from the on-chip memory 1020.

Here, the kernel generator 1015 generates new weight information 1017 by erasing weights corresponding to the indexes 1012-1 and 1012-3 of the weight information 1012 and the index 1013-1 of the weight information 1013 from the received weight information 1014. Here, the weight information 1017 includes indexes 1017-1 and 1017-3 and weights 1017-2 and 1017-4 corresponding to the indexes 1017-1 and 1017-3. The weight information 1017 may refer to the weight information corresponding to the first class, and as a result, may be the same as the weight information 1011.

Because the remaining operations of FIG. 10C may correspond to those of FIGS. 10A and 10B, redundant descriptions are omitted.

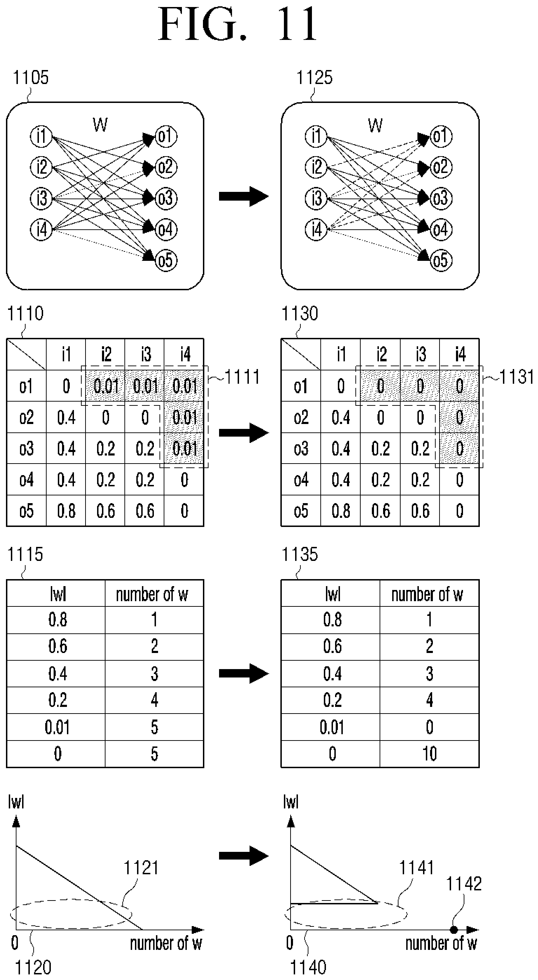

FIG. 11 is a diagram for describing a distribution of weights changed based on a pruning operation.

Referring to FIG. 11, an organization chart 1105 may be an organization chart corresponding to basic weight information, and an organization chart 1125 may be an organization chart after a pruning operation. In the organization chart 1105 and the organization chart 1125, a relationship between an input layer and an output layer may be represented. Meanwhile, the pruning operation may be performed by an artificial intelligence model.

It is assumed that the input layer includes 4 nodes i1, i2, i3, and i4 and the output layer includes 5 nodes o1, o2, o3, o4, and o5. Here, weights may be determined between the nodes of the input layer and the nodes of the output layer, and in the above-described assumption, a total of 20 weights may be determined. In the organization chart 1105 and the organization chart 1125, a thick solid line may refer to data having a weight of being not 0, a thin solid line may refer to data having a weight of 0, and a dotted line may refer to data on which the pruning operation is performed.

Table 1110 may refer to basic weight information, and Table 1130 may refer to weight information in which the pruning operation is performed in the basic weight information. The artificial intelligence model may identify weights of being not 0 from the 20 weights included in the table 1110, and may identify weights less than a preset threshold value (0.1) from the weights of being not 0. The artificial intelligence model may group the weights less than the preset threshold value (0.1) in the weights of being not 0 into one group 1111. In addition, the artificial intelligence model may perform a pruning operation on the identified group 1111. Here, the pruning operation may refer to an operation of changing the data of being not 0 to 0. All weights of a data group 1131 after performing the pruning operation on the identified group 1111 may be 0.

Table 1115 may represent the number information for each size of the weight for the basic weight information, and Table 1135 may represent the number information for each size of the weight for the weight information on which the pruning operation is performed. The table 1115 may correspond to the table 1110, and the table 1135 may correspond to the table 1130.

A graph 1120 may represent the relationship between the size of the weight and the number of weights for the basic weight information, and a graph 1140 may represent the relationship between the size of the weight and the number of weights for the weight information on which the pruning operation is performed. According to the graph 1120, the basic weight information may have a distribution in which the number of weights decreases as the size of the weight increases and the number of weights increases as the size of the weight decreases. In addition, a region 1121 may correspond to the group 1111, and a region 1141 may correspond to the group 1131. Meanwhile, the point 1142 may indicate that a result of an increase in the number of zeros is reflected based on the pruning operation.

FIG. 12 is a diagram for describing an example of determining a weight without considering resources of an electronic device.

Referring to FIG. 12, the total number of weights included in the weight information may be fixed. If the total number of weights is fixed, the accuracy of the artificial intelligence module including the weights may also be constant.

Table 1205 is a table illustrating the relationship between the number of weights and the accuracy of the artificial intelligence module. If the total number of weights is fixed to n1, the accuracy of the artificial intelligence module may also be fixed. It is assumed that the electronic device 100 includes an artificial intelligence module that recognizes a person's face, and the number of faces in the analysis limit is 7.

In a first example 1210, it is assumed that the number of target faces is 4. Because the number of faces in the analysis limit of the artificial intelligence module is 7, the electronic device 100 may analyze all four target faces that are smaller than the number of faces in the analysis limit. The first example 1210 may be an example corresponding to a case in which the resources of the electronic device 100 are sufficient.

In a second example 1215, it is assumed that the number of target faces is 15. Because the number of faces in the analysis limit of the electronic device 100 is 7, the electronic device 100 may not analyze all target faces. Therefore, the electronic device 100 may identify 7 faces of the 15 target faces and perform analysis on only 7 target faces and may not analyze the remaining 8 target faces. The second example 1215 may be an example corresponding to a case in which the resources of the electronic device 100 are insufficient.

FIG. 13 is a diagram 1305 for describing an example of determining a weight in consideration of resources of an electronic device.

Referring to FIG. 13, the total number of weights included in the weight information may be changed. If the total number of weights is changed, the accuracy of the artificial intelligence module may be changed. If the total number of weights decreases, the accuracy of the artificial intelligence module may decrease, and if the total number of weights increases, the accuracy of the artificial intelligence module may increase.

It is assumed that the total number of current weights of the artificial intelligence module included in the electronic device 100 is n1 and the number of faces in the analysis limit is 7.

In a first example 1310, it is assumed that the number of target faces is 4. Because the number of faces in the analysis limit of the electronic device 100 is 7, the electronic device 100 may analyze all four target faces that are smaller than the number of faces in the analysis limit. The first example 1310 may be an example corresponding to a case in which the resources of the electronic device 100 are sufficient.

In a second example 1315, it is assumed that the number of target faces is 15. Because the number of faces in the analysis limit of the artificial intelligence module is 7, the electronic device 100 may not analyze all target faces. Therefore, the electronic device 100 may change the total number of weights to analyze all 15 target faces. The electronic device 100 may change the total number of weights to n2, which is smaller than n1. As the total number of weights decreases, the amount of calculation decreases, and as a result, the resources of the electronic device 100 may be secured. In addition, if the total number of weights is n2, it is assumed that the number of faces in the analysis limit is 15. The electronic device 100 may analyze all of the target faces (15) by changing information on the total number of weights for the artificial intelligence module from n1 to n2, which is a value smaller than n1.

However, because the total number of weights decreases, the accuracy of the artificial intelligence module may decrease. The electronic device 100 may identify an optimal operation point among a plurality of operation points in consideration of both the accuracy required by the user and the resource information of the electronic device 100. The electronic device 100 may change the total number of weights from n1 to n2 based on the identified optimal operation point.

FIG. 14A is a diagram for describing an operation of sorting a plurality of weights into a plurality of classes.

Referring to FIG. 14A, the electronic device 100 may train weight information in advance before performing artificial intelligence analysis. Here, the weight information trained in advance may be generated in an external server other than the electronic device 100. In addition, the external server may sort the weight information into a plurality of classes. The number of classes may be a predefined number, and a training method may also be predefined.

A plurality of tables 1405, 1410, 1415-1, 1415-2, 1420, 1425, 1430, and 1435 disclosed in FIG. 14A may represent the relationship between the size of the weight and the number of weights.

Meanwhile, in order to sort the weight information into the plurality of classes, the external server may include a first phase 1401 and a second phase 1402.

In the first phase 1401, the weight information may be sorted into a class A1 and a class B1. According to the table 1405, the class A1 may be a class having a relatively large size of the weight (or importance of the weight), and the class B1 may be a class having a relatively small size of the weight (or importance of the weight). A criterion of sorting the class A1 and the class B1 may be preset information or user input information. For example, the preset information may be a criterion of sorting the first class as the top 20% and sorting the second class as from the top 20% to the top 100%. The external server may group the weights corresponding to the top 20% into the class A1 and group the weights corresponding to the top 20% to the top 100% into the class B1, based on the size of the weight (or the importance of the weight) among all weights. Here, in sorting all weights into the class A1 and the class B1, according to an embodiment, a value of an existing weight may be changed based on a training result. However, according to another embodiment, the sorting of the weight information into the plurality of classes may be implemented in a form in which only the grouping operation is performed while the value of the existing weight is maintained.

In addition, the external server may perform a pruning operation on a class (class B1) having a relatively small size of the weight among the plurality of classes (S1406). If the pruning operation is performed on the class B1, a weight having a relatively small size may be changed to 0, and a relationship graph corresponding to the changed result may be a graph 1410. The graph 1410 may indicate that only relatively large weights remain when the pruning operation is performed on the weight information.

In addition, the external server may perform a retraining operation on the class (class A1) remaining in the weight information (S1411-1). A relationship graph corresponding to a result of the retraining operation S1411-1 may be the graph 1415-1. Here, the retraining operation S1411-1 may refer to an operation of retraining the weights included in the class A1. Based on the operation of retraining the weights, the weights included in the existing class A1 may be changed, and the changed weights may be described as a class A2. That is, the weights of the class A1 and the class A2 may be different.

The external server may perform a retraining operation on the class A2 (S1411-2). A relationship graph corresponding to a result of the retraining operation S1411-2 may be the graph 1415-2. Here, the retraining operation S1411-2 may refer to an operation of sorting one class into a plurality of classes again. For example, the external server may sort the class A2 into a class a11 and a class a12 based on the retraining operation. A criterion of sorting the class A2 into the class a11 and the class a12 may be preset information or user input information. For example, it is assumed that the criterion of sorting the class into the plurality of classes is 50% of a target class. The external server may group the weights corresponding to the top 50% into the class a11 and group the weights corresponding to the top 50% to the top 100% into the class a12, among the weights included in the class A2. Here, the class a11 and the class a12 may each include 10% of the total weight. Here, the retraining operation S1411-2 may include an operation of changing values of the weights together with the grouping operation. That is, based on a result of the retraining operation S1411-2, the weights included in the class A2 and the weights included in the class a11 and the class a12 may be different.

In addition, the external server may perform a pruning operation on a class (class a12) having a relatively small size of the weight among the plurality of classes (S1406). If the pruning operation is performed on the class a12, a weight having a relatively small size may be changed to 0, and a relationship graph corresponding to the changed result may be the graph 1420. The graph 1420 may indicate that only relatively large weights remain when the pruning operation is performed on the weight information.

In addition, the external server may perform a retraining operation on the class (class a11) remaining in the weight information (S1421). Here, the retraining operation may refer to changing the weight included in the existing class to a new weight. A relationship graph corresponding to a result of the retraining operation S1421 may be the graph 1425. For example, the external server may change the class a11 to a class a13. Here, the weights included in the class a13 and the weights included in the class a11 may be different. Here, the relearning operation S1421 may be an operation that moves from the first phase 1401 to the second phase 1402.

In addition, the external server may perform a retraining operation on the weight information (S1426). Here, the retraining operation may refer to performing retraining by adding the class (class a12) that has been erased by the pruning operation to the class (class a13) remaining in the weight information. The performing of the retraining by adding the class (class a12) that has been erased by the pruning operation may refer to that the weights included in the class a12 are changed. A relationship graph corresponding to a result of the retraining operation S1426 may be the graph 1430. For example, the external server may sort the class a13 and a class a14 based on the retraining operation. In addition, the class a14 may be a class generated in the operation S1426 of retraining the class a12. Specifically, the external server may add the class a12 and perform the retraining operation S1426 for the class a13 and the class a12. Here, while the retraining operation S1426 is performed, the weights included in the class a13 may not be changed. The external server may change only the weights included in the class a12, and may change the weights included in the class a12 to group the changed weights into a new class a14. That is, the external server may generate a new class a14 by changing the weights included in the class a12. The class a14 may be a class generated in the operation S1426 of retraining the class a12, and the weights included in the class a14 and the weights included in the class a12 may be different.

In addition, the external server may perform a retraining operation on the weight information (S1431). Here, the retraining operation may refer to performing retraining by adding the class (class B1) that has been erased by the pruning operation to the classes (class a13 and class a14) remaining in the weight information. The performing of the retraining by adding the class (class B1) that has been erased by the pruning operation may refer to that the weights included in the class B1 are changed. A relationship graph corresponding to a result of the retraining operation S1431 may be the graph 1435. For example, the external server may add the class B2 to the class a13 and the class a14 based on the retraining operation. Here, values of the weights corresponding to the class a13 and the class a14 may not be changed by the retraining operation S1431. The external server performs the retraining operation based on the class a13, the class a14, and the class B1, and may change only the weights corresponding to the class B1. Here, a new class B2 may be generated by changing the weights corresponding to the class B1. The class B2 may be a class generated in the operation S1431 of retraining the class B1, and the weights included in the class B2 and the weights included in the class B1 may be different.

The external server may finally sort the weight information into three groups (class a13, class a14, and class B2), and may store the finally obtained three groups (class a13, class a14, and class B2) in the memory. In addition, the external server may store weight information corresponding to the three groups (class a13, class a14, and class B2) stored in the memory, respectively.

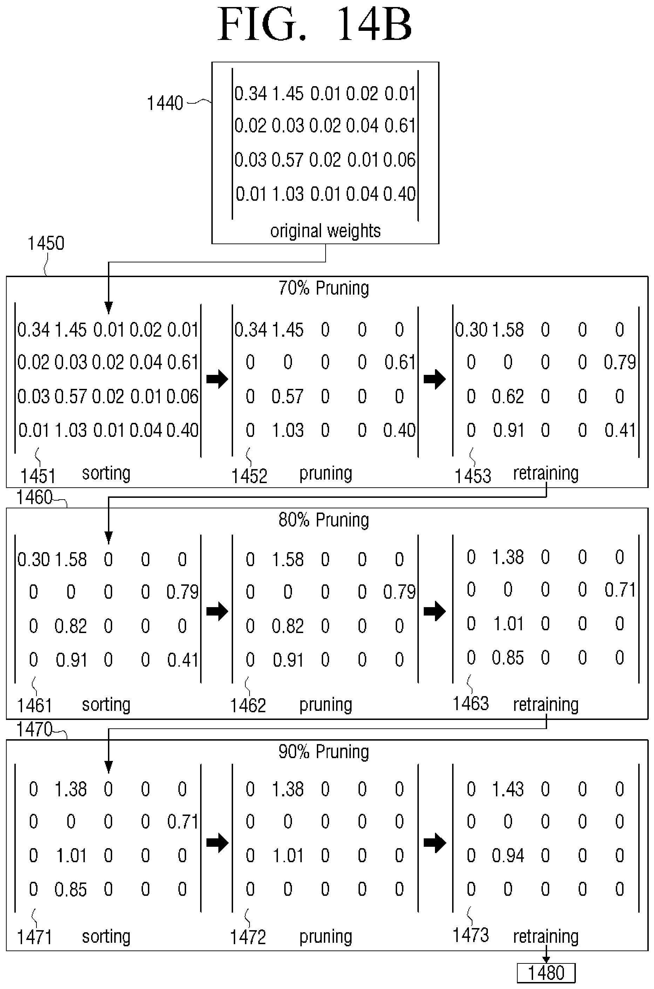

FIG. 14B is a diagram for describing a calculation process of the operation of sorting the plurality of weights into the plurality of classes.

Referring to FIG. 14B, the external server may include original weights. Here, the original weights may be represented by a 4*5 matrix illustrated in Table 1440. The external server may perform a 70% pruning operation 1450, an 80% pruning operation 1460, and a 90% pruning operation 1470 based on the original weights.

The 70% pruning operation 1450 may refer to converting weights of 70% to 0 while leaving weights of 30% from the original weights. The 70% pruning operation 1450 may include a sorting operation, a pruning operation, and a retraining operation. Here, the sorting operation may refer to arranging weights (original or converted weights) in a preset manner. In a first sorting operation, the external server may arrange the original weights as illustrated in Table 1451 without any separate data conversion. In addition, the external server may prune weights corresponding to 70% of the weights corresponding to the table 1451. The weights to be pruned may be determined based on the size of the weight. However, various criteria may be additionally applied without necessarily considering only the size of the weight. If the 70% pruning is performed, the external server may obtain weights corresponding to Table 1452. The external server may perform a retraining operation after obtaining the weights corresponding to the table 1452. The external server may obtain weights corresponding to Table 1453 as a result of the retraining operation. The external server may perform an 80% pruning operation 1460 based on the weights corresponding to the table 1453.

The 80% pruning operation 1460 may refer to converting weights of 80% to 0 while leaving weights of 20% from the weights (including 0) corresponding to the table 1453. The external server may perform a sorting operation on the weights corresponding to the table 1453. While performing the sorting operation, the external server may change some weights. For example, the external server may change "0.62" among weights corresponding to the table 1453 to "0.82". The external server may obtain weights corresponding to Table 1461 based on the sorting operation. In addition, the external server may obtain weights corresponding to Table 1462 by performing a pruning operation based on the obtained weights corresponding to the table 1461. In addition, the external server may obtain weights corresponding to Table 1463 by performing a retraining operation based on the obtained weights corresponding to the table 1462. The external server may perform a 90% pruning operation 1470 based on the weights corresponding to the table 1463.

The 90% pruning operation 1470 may refer to converting weights of 90% to 0 while leaving weights of 10% from the weights (including 0) corresponding to the table 1463. The external server may perform a sorting operation on the weights corresponding to the table 1463. Here, the sorting operation may refer to that the weights are arranged without separate data change. The external server may obtain weights corresponding to Table 1471 based on the sorting operation. In addition, the external server may obtain weights corresponding to Table 1472 by performing a pruning operation based on the obtained weights corresponding to the table 1471. In addition, the external server may obtain weights corresponding to Table 1473 by performing a retraining operation based on the obtained weights corresponding to the table 1472. Here, the external server may identify that weights ("1.43" and "0.94") having a value of being not 0 among the weights corresponding to the table 1473 are weights corresponding to the first class. In addition, the external server may perform a restoring operation 1480 to identify weights corresponding to the second class.

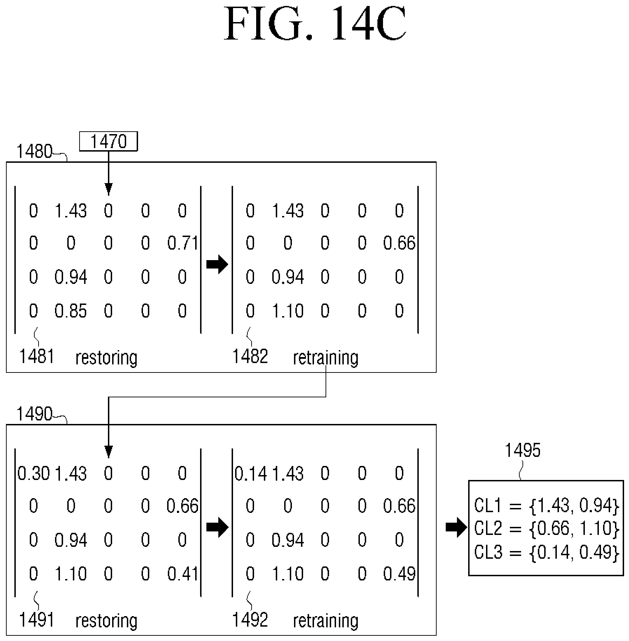

FIG. 14C is a diagram for continuously describing the operation of FIG. 14B.

Referring to FIG. 14C, the external server may perform the restoring operation 1480 based on the weights corresponding to the table 1473. Specifically, the external server may obtain weights corresponding to Table 1481 by restoring weights ("0.71" and "0.85") that have been converted into 0 in the 90% pruning operation 1470. In addition, the external server may obtain weights corresponding to Table 1482 by performing a retraining operation based on the weights corresponding to the table 1481. Here, some weights may be changed based on the retraining operation. Here, the external server does not change the weights ("1.43" and "0.94") corresponding to the first class, and may change only the weights ("0.71" and "0.85") added in the restoring operation 1480 to new weights ("0.66" and "1.10"). Here, the external server may identify the weights ("0.66" and "1.10") newly obtained in the restoring process as the weights corresponding to the second class.

Meanwhile, the external server may perform a restoring operation 1490 based on the weights corresponding to the table 1482. Specifically, the external server may obtain weights corresponding to Table 1491 by restoring weights ("0.30" and "0.41") that have been converted into 0 in the 80% pruning operation 1460. In addition, the external server may obtain weights corresponding to Table 1492 by performing a retraining operation based on the weights corresponding to the table 1491. Here, some weights may be changed based on the retraining operation. Here, the external server does not change the weights ("1.43" and "0.94") corresponding to the first class and the weights ("0.66" and "1.10") corresponding to the second class, and may change only weights ("0.30" and "0.41" added in the restoring operation 1490 to new weights ("0.14" and "0.49"). Here, the external server may identify the weights ("0.14" and "0.49") newly obtained in the restoring process as weights corresponding to the third class.

As a result, the external server may obtain weights 1495 sorted into a plurality of classes. Specifically, the weights corresponding to the first class may be "1.43" and "0.94", the weights corresponding to the second class may be "0.66" and "1.10", and the weights corresponding to the third class may be "0.14" and "0.49". The external server may generate weight information by combining indexes and weights corresponding to the indexes with respect to the obtained weights 1495. In addition, the external server may transmit the generated weight information to the electronic device 100.

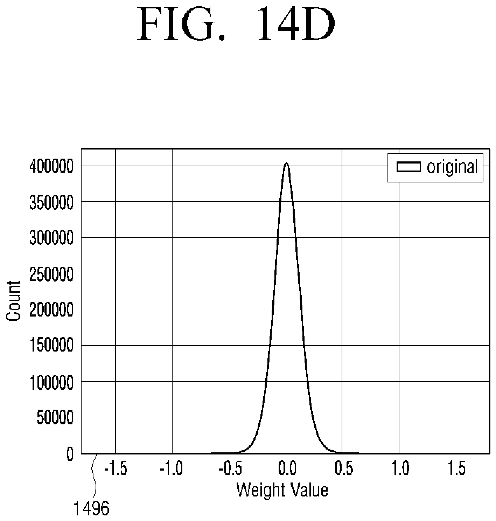

FIG. 14D is a diagram for describing a distribution of weights.

Referring to FIG. 14D, a graph 1496 may represent a distribution of weights. A horizontal axis of the graph 1496 may refer to a weight, and a vertical axis may refer to the number of weights. In relation to the weights described in FIGS. 14A and 14B, as an absolute value of the weight is small, the number of weights may be large, and as the absolute value of the weight is large, the number of weights may be small.

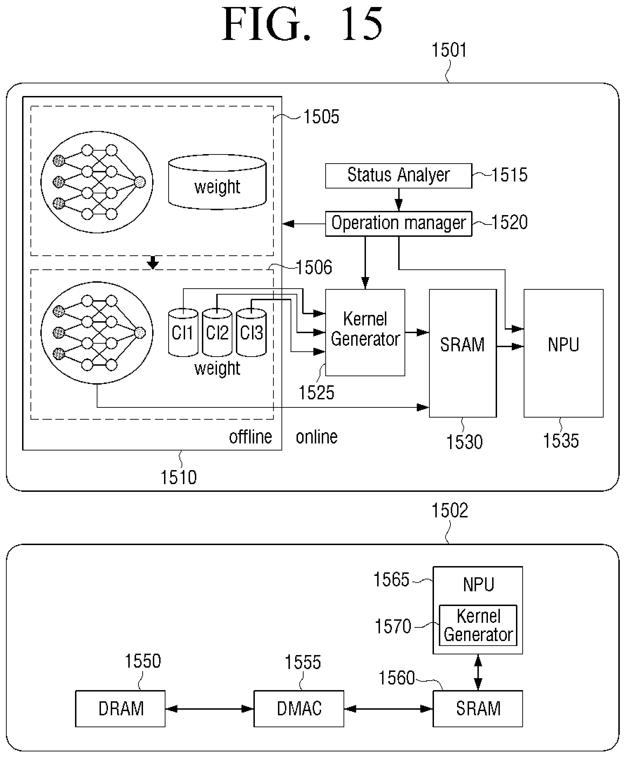

FIG. 15 is a diagram for describing a plurality of examples of performing artificial intelligence analysis based on weight information sorted into the plurality of classes.

A first example 1501 disclosed in FIG. 15 may be an example in which a kernel generator 1525 and a neural network processor (NPU) 1535 are separated. Specifically, the first example 1501 may include an operation 1510 of sorting original weights into a plurality of classes and an operation of determining whether to use weights corresponding to which class based on weights of the plurality of sorted classes and the resources of the electronic device 100. Here, the operation 1510 of sorting and storing the weights into the plurality of classes may be performed in the external server (not illustrated), and other operations may be performed in the electronic device 100. The electronic device 100 may receive the weights sorted into the plurality of classes from the external server (not illustrated) and store the received weights in a DRAM (memory). Meanwhile, the external server (not illustrated) may refer to a server that performs a calculation process to determine weights used in an artificial intelligence model.

In relation to the operation 1510 of sorting and storing the original weights into the plurality of classes, the external server (not illustrated) may change from an environment 1505 in which the original weights are stored to an environment 1506 in which the original weights are sorted into the plurality of classes. The environment 1505 in which the original weights are stored may refer to an environment in which a plurality of weights used in the artificial intelligence module are maintained at a preset number. The environment 1506 in which the original weights are sorted into the plurality of classes may refer to an environment in which the initially stored preset weights are sorted into the plurality of classes based on a size value of the weight (or importance of the weight). Because a detailed operation of the environment 1506 in which the original weights are sorted into the plurality of classes has been described with reference to FIGS. 14A and 14B, a redundant description is omitted. Meanwhile, the environment 1505 in which the original weights are stored and the environment 1506 in which the original weights are sorted into the plurality of classes may be environments of the external server (not illustrated). The external server (not illustrated) may transmit weight information corresponding to each of the environments 1505 and 1506 to the electronic device 100, and the electronic device 100 may store the received weight information in a DRAM (not illustrated). In particular, the electronic device 100 may sort and store the weights into the plurality of classes in an offline status (an environment not connected to an external network).

According to the first example 1501, the electronic device 100 may include at least one of a DRAM (not illustrated), a status analysis module 1515 (status analyzer), an operation control module 1520 (operation manager), a kernel generator 1525, an SRAM 1530, or a neural network processor 1535.

The DRAM (not illustrated) may receive and store weight information corresponding to the plurality of classes from an external server (not illustrated). In addition, the electronic device 100 transmits necessary weight information from the DRAM (not illustrated) to the kernel generator 1525 based on the kernel generator 1525. In addition, the kernel generator 1525 generates new weight information based on the necessary weight information. Meanwhile, when the kernel generator 1525 does not need to change the weight information, the electronic device 100 may directly transmit the weights to the SRAM 1530 from the DRAM (not illustrated).

Whether to generate the new weight information by combining the weight information or to use the existing weight information as it is is determined based on the status analysis module 1515 and the operation control module 1520. Specifically, the status analysis module 1515 analyzes a current status of resources of the electronic device 100. In addition, the operation control module 1520 determines an operation point based on the resources of the electronic device 100 identified by the status analysis module 1515. An operation of selecting the operation point is an operation of determining how to use the weight information corresponding to the plurality of classes stored in the DRAM (not illustrated).

When the current resources of the electronic device 100 are sufficient, the operation control module 1520 performs artificial intelligence analysis using all weight information corresponding to all classes. In order to synthesize the weight information corresponding to all classes and perform the artificial intelligence analysis, the operation control module 1520 determines to combine (or integrate) weight information corresponding to the first class, weight information corresponding to the second class, and weight information corresponding to the third class. In addition, the electronic device 100 transmits the weight information corresponding to the first class, the weight information corresponding to the second class, and the weight information corresponding to the third class from the DRAM (not illustrated) to the kernel generator 1525, and generates integrated weight information corresponding to the first class, the second class, and the third class in the kernel generator 1525. In addition, the electronic device 100 transmits the generated integrated weight information from the kernel generator 1525 to the SRAM 1530.

When the resources of the electronic device 100 are insufficient, the operation control module 1520 identifies an optimal operation point. The optimal operation point may be determined based on at least one of user satisfaction (analysis accuracy) and processing time. It is assumed that the optimal operation point is determined to perform artificial intelligence analysis using only the weight information corresponding to the first class. The operation control module 1520 may transmit a control signal to the DRAM (not illustrated) to transmit the weight information corresponding to the first class stored in the DRAM (not illustrated) to the SRAM 1530 without generating new weight information.

The SRAM 1530 receives the weight information from the DRAM (not illustrated) or the kernel generator 1525 and transmits the weight information to the neural network processor 1535. The neural network processor 1535 may perform artificial intelligence analysis based on the received weight information.

Meanwhile, a second example 1502 may be an example in which a kernel generator 1570 is included in an NPU 1565. In the second example 1502, as in the first example 1501, the operation 1510 of sorting and storing the original weights into the plurality of classes in the external server may be performed in the same manner, and thus a redundant description is omitted.

According to the second example 1502, the electronic device 100 may include a DRAM 1550, a DMAC 1555, an SRAM 1560, an NPU 1565, and a kernel generator 1570. The electronic device 100 may receive the weight information sorted into the plurality of classes from the external server (not illustrated) and store the weight information in the DRAM 1550. In addition, the electronic device 100 analyzes a resource status of the electronic device 100 and determines an operation point based on a status analysis module (not illustrated) and an operation control module (not illustrated). The electronic device 100 may store information on the determined operation point in the NPU 1565. In addition, the NPU 1565 may generate a control signal requesting weight information corresponding to the determined operation point. In addition, the electronic device 100 may transmit the generated control signal to the DRAM 1550. In addition, the electronic device 100 obtains weight information corresponding to the generated control signal from the DRAM 1550 and transmits the weight information to the NPU 1565 through the DMAC 1555 and the SRAM 1560. In addition, the NPU 1565 may transmit the received weight information to the kernel generator 1570. In addition, the kernel generator 1570 generates new weight information corresponding to the determined operation point based on the received weight information.

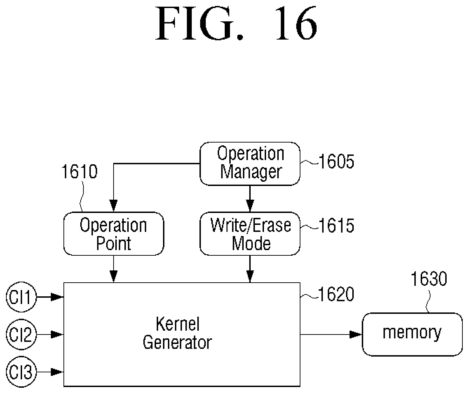

FIG. 16 is a diagram for describing another example of performing artificial intelligence analysis based on weight information sorted into the plurality of classes.

Referring to FIG. 16, the electronic device 100 may include at least one of an operation control module 1605, an operation point determination module 1610, a mode determination module 1615, a kernel generator 1620, or a memory 1630. Here, the memory 1630 may be an on-chip memory or an SRAM.

The operation control module 1605 analyzes the resources of the electronic device 100 to determine whether the current resources of the electronic device 100 are sufficient or insufficient. If the resources of the electronic device 100 are insufficient, the operation control module 1605 uses the operation point determination module 1610 to find an optimal operation point. The operation point determination module 1610 identifies the optimal operation point by comparing resources currently available in the electronic device 100 with required resources. Specifically, the operation point determination module 1610 may determine which of a plurality of classes is used to perform artificial intelligence analysis. When it is determined by the operation point determination module 1610 which class is used to perform artificial intelligence analysis, the kernel generator 1620 receives weight information corresponding to a class corresponding to the class determined by the operation point determination module 1610. In addition, the kernel generator 1620 generates new weight information based on the received weight information. In addition, the kernel generator 1620 transmits the generated weight information to the memory 1630.

After identifying the optimal operation point, the operation control module 1605 determines whether to add weight information corresponding to a current new class or erase weight information corresponding to a specific class from the existing weight information. An example of adding the weight information corresponding to the current new class may be similar to the examples of FIGS. 5A and 9, and an example of erasing the weight information corresponding to the specific class from the existing weight information may be similar to the example of FIG. 10A.

The mode determination module 1615 may receive a control signal for whether an insertion mode or an erase mode is currently required based on the current resource status of the electronic device 100. In the case of the example of adding the weight information corresponding to the new class, the mode determination module 1615 may determine the insertion mode. The insertion mode may refer to generating new weight information by inserting a new weight into an existing index. In the case of the example of erasing the weight information corresponding to the specific class from the existing weight information, the mode determination module 1615 may determine the erase mode. The erase mode may refer to changing at least one of the existing weights to 0. The mode determination module 1615 may transmit a corresponding control signal to the kernel generator 1620 according to the determined mode.

Here, the kernel generator 1620 may serve as a decoder. The decoder may configure the classes according to a difference between a previously set operation point and a currently set operation point. In addition, the decoder may decode and combine the weight information of each class. In addition, the decoder may transmit data to the kernel generator 1620 according to the mode determined by the mode determination module 1615. In the case of the insertion mode, the kernel generator 1620 may transmit both the indexes and the weights to the kernel generator 1620. In addition, in the case of the erase mode, the kernel generator 1620 may transmit only the indexes to the kernel generator 1620. In the case of the insert mode, because the operation of inserting the weights needs to be performed, the weights are required, but in the case of the erase mode, because the weight of a specific position is erased, only the index corresponding to the specific position may be transmitted.

In addition, the kernel generator 1620 generates new weight information by performing a predefined operation according to the insertion mode or the erase mode. In addition, the kernel generator 1620 transmits the generated weight information to the memory 1630. The electronic device 100 may perform artificial intelligence analysis based on the weight information transmitted to the memory 1630.

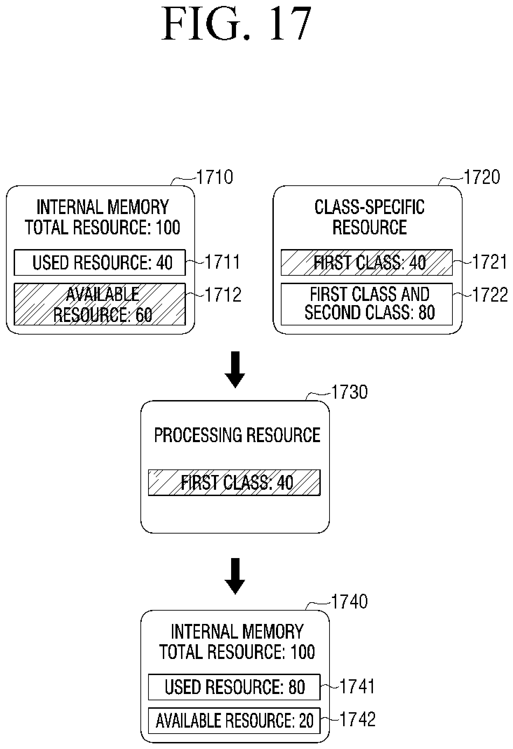

FIG. 17 is a diagram for describing an example of identifying classes in consideration of resource information.

Referring to FIG. 17, the electronic device 100 may identify a class used for artificial intelligence analysis based on an internal memory resource 1710 and a class-specific resource 1720.

It is assumed that the total resources of the internal memory included in the electronic device 100 are 100. The internal memory resource 1710 may include a used resource 1711 and an available resource 1712. The used resource 1711 may refer to a resource currently used by the internal memory, and the available resource 1712 may refer to a capacity that may be additionally processed in a current internal memory.

In relation to the current internal memory, it is assumed that the used resource 1711 is 40 and the available resource 1712 is 60. In addition, the class-specific resource 1720 (or class combination-specific resource) may refer to resource information according to a plurality of class combinations. For example, the electronic device 100 may store a resource 1721 necessary for performing artificial intelligence analysis using only the first class and a resource 1722 necessary for performing artificial intelligence analysis using the first class and the second class. Here, it is assumed that the resource 1721 necessary for performing the artificial intelligence analysis using only the first class is 40 and the resource 1722 necessary for performing the artificial intelligence analysis using the first class and the second class is 80.

Because the available resource 1712 is 60, the electronic device 100 may determine that an operation requiring a resource higher than the available resource 1712 is not processed. In addition, the electronic device 100 may process an operation requiring a resource smaller than the available resource 1712. A class combination corresponding to the resource smaller than the available resource 1712 may be determined as a case of using only the first class. Therefore, the electronic device 100 may perform the artificial intelligence analysis using only the first class. In this case, a processing resource 1730 to be additionally processed in the internal memory may be 40.

The electronic device 100 may perform the artificial intelligence analysis using only the first class, and while the artificial intelligence analysis is performed, the resource 1740 of the internal memory may have a used resource 1741 of 80 and an available resource 1742 of 20.

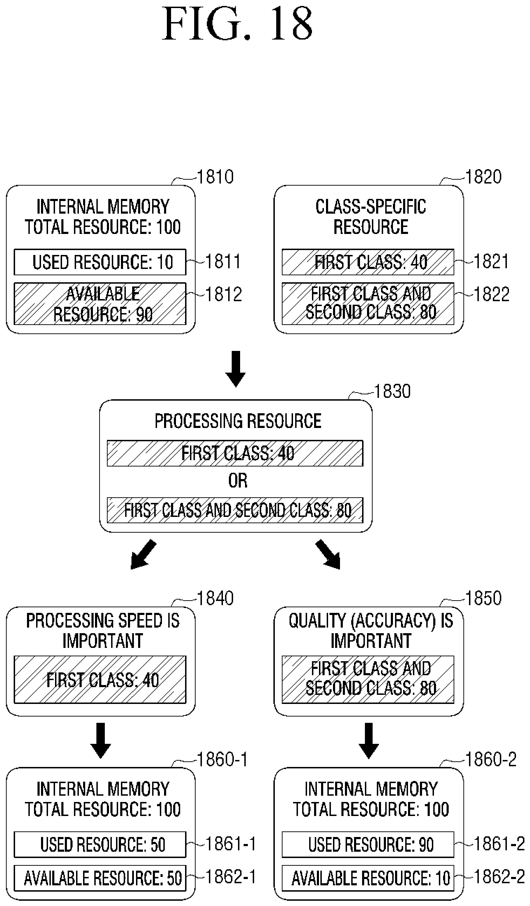

FIG. 18 is a diagram for describing another example of identifying classes in consideration of the resource information.

Referring to FIG. 18, because an internal memory resource 1810, a class-specific resource 1820, a processing resource 1830, used resources 1811, 1861-1, and 1861-2, and available resources 1812, 1862-1, and 1862-2 may correspond to the internal memory resource 1710, the class-specific resource 1720, the processing resource 1730, the used resources 1711 and 1741, and the available resources 1712 and 1742 of FIG. 17, redundant descriptions are omitted.

It is assumed that the total resources of the internal memory included in the electronic device 100 are 100. In addition, in relation to a current internal memory, it is assumed that the used resource 1811 is 10 and the available resource 1812 is 90. In addition, in relation to the class-specific resource 1820, it is assumed that the resource 1821 necessary for performing artificial intelligence analysis using only the first class is 40 and the resource 1822 necessary for performing artificial intelligence analysis using the first class and the second class is 80.

The electronic device 100 may identify a class combination smaller than the available resource 1812 of the current internal memory. The class combination smaller than the available resource 1812 may be a combination using the first class and a combination using both the first class and the second class. There may be a situation in which a plurality of combinations may all be executed in relation to the class combination because the available resource 1812 of the internal memory is sufficient. That is, the processing resource 1830 may be 40 in the case of artificial intelligence analysis using only the first class, and may be 80 in the case of artificial intelligence analysis using both the first class and the second class.

Therefore, the electronic device 100 may identify a specific combination among the plurality of combinations based on a preset criterion. The preset criterion may be related to user satisfaction, and the user satisfaction may be at least one of a processing speed or a quality (accuracy) of a processing result.

As an example, it is assumed that the electronic device 100 performs (1840) artificial intelligence analysis whose processing speed is important. The electronic device 100 may identify a class combination having a low resource (using only the first class) among the plurality of class combinations. In addition, while performing the artificial intelligence analysis using only the first class, the resource 1860-1 of the internal memory may have the used resource 1861-1 of 50 and the available resource 1862-1 of 50.

As another example, it is assumed that the electronic device 100 performs (1850) artificial intelligence analysis in which the quality of the processing result is important. The electronic device 100 may identify a class combination having a high resource (using both the first class and the second class) among the plurality of class combinations. In addition, while performing the artificial intelligence analysis using the first class and the second class, the resource 1860-2 of the internal memory may have the used resource 1861-2 of 90 and the available resource 1862-2 of 10.

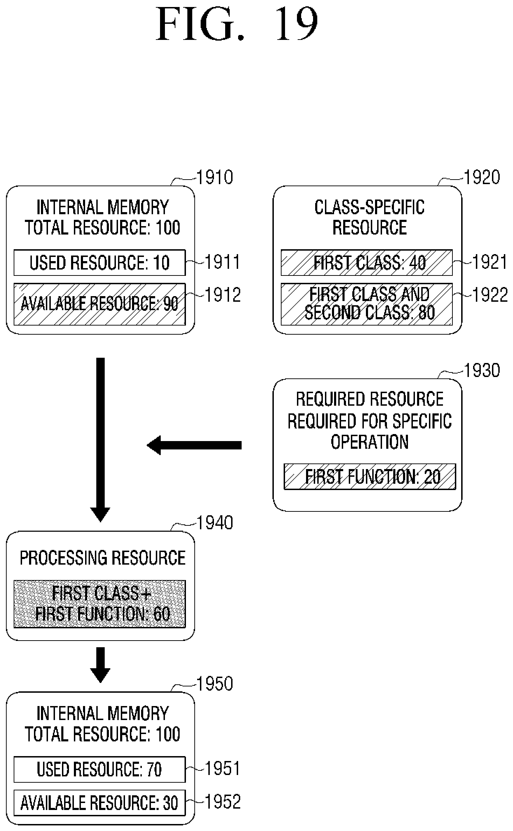

FIG. 19 is a diagram for describing still another example of identifying classes in consideration of the resource information.

Referring to FIG. 19, because an internal memory resource 1910, a class-specific resource 1920, a processing resource 1940, used resources 1911 and 1951, and available resources 1912 and 1952 may correspond to the internal memory resource 1710, the class-specific resource 1720, the processing resource 1730, the used resources 1711 and 1741, and the available resources 1712 and 1742 of FIG. 17, redundant descriptions are omitted.

It is assumed that the total resources of the internal memory included in the electronic device 100 are 100. In addition, in relation to a current internal memory, it is assumed that the used resource 1911 is 10 and the available resource 1912 is 90. In addition, in relation to the class-specific resource 1920, it is assumed that the resource 1921 necessary for performing artificial intelligence analysis using only the first class is 40 and the resource 1922 necessary for performing artificial intelligence analysis using the first class and the second class is 80.

When the electronic device 100 performs the artificial intelligence analysis, in addition to resources required according to class combinations, there may be a required resource 1930 required for a specific operation during artificial intelligence analysis. For example, various functions performed during artificial intelligence analysis may require additional resources. For example, it is assumed that a resource of a first function is 20 during the operation performed in the artificial intelligence analysis.

In FIGS. 17 and 18, only resources according to class-specific combinations are considered, but the electronic device 100 may additionally consider the required resource 1930 required for a specific operation. As a result, a total of 60 resources may be required to perform the first function using only the first class, and a total of 100 resources may be required to perform the first function using the first class and the second class.

Here, the electronic device 100 may determine that the first function may not be performed using the first class and the second class because the available resource 1912 is 90, and perform the first function using only the first class. Here, the processing resource 1940 may be 60 in relation to an operation additionally performed in the internal memory.

In addition, while performing the first function during the artificial intelligence analysis using only the first class, the resource 1950 of the internal memory may have the used resource 1951 of 70 and the available resource 1952 of 30.

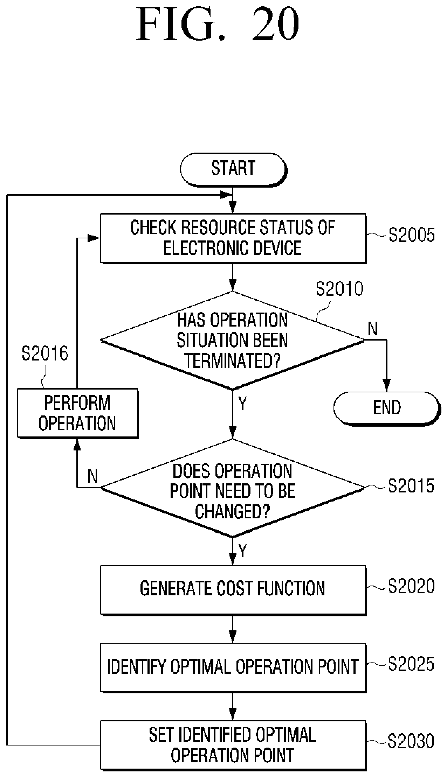

FIG. 20 is a flowchart for describing an operation of setting an operation point.

Referring to FIG. 20, the electronic device 100 may check a resource status of the electronic device 100 (S2005). The electronic device 100 may obtain real-time resource information of the current electronic device 100.

In addition, the electronic device 100 may determine whether an operation situation has terminated (S2010). Here, the operation situation may refer to a situation in which the current electronic device 100 performs a specific operation using a resource. For example, the operation situation may be a situation in which the electronic device 100 performs mathematical calculations for artificial intelligence analysis.

If the operation situation of the electronic device 100 is not terminated, the electronic device 100 may determine whether or not an operation point needs to be changed (S2015). In addition, if the operation situation of the electronic device 100 is terminated, the electronic device 100 may not determine whether or not the operation point needs to be changed. Here, the operation point may refer to a data processing method or a data processing reference value in which the current electronic device 100 performs a specific operation using a resource.

For example, the change in the operation point may refer to that the data processing method or the data processing reference value is changed. The data processing method may be a method of processing data at a fast speed or a method of processing data to obtain a high quality (accuracy) analysis result. In general, the data processing method for fast speed or high quality may require a lot of resources, and the data processing methods for slow speed or low quality may require fewer resources.

The electronic device 100 may compare the resource of the electronic device 100 obtained in step S2005 with a resource required amount of a specific operation to be currently performed. If the resource required amount of the specific operation to be currently performed is smaller than the resource of the electronic device 100, the electronic device 100 may perform the specific operation and continue to check the resource status of the electronic device 100 (S2016).

If the resource required amount of the specific operation to be currently performed is larger than the resource of the electronic device 100, the electronic device 100 may determine that the operation point needs to be changed. In addition, the electronic device 100 may generate a cost function. The cost function may refer to a function used to change the operation point. The electronic device 100 may identify an optimal operation point using the cost function (S2025). The electronic device 100 may identify an operation point that maximizes user satisfaction, and the user satisfaction may be at least one of a processing speed or a quality of a processing result. Each user may put a premium on the processing speed or put a premium on the high quality. Therefore, the user satisfaction may vary for each user and may be changed by setting. Therefore, the electronic device 100 may identify the optimal operation point based on a predefined user satisfaction. In addition, the electronic device 100 may perform artificial intelligence analysis by setting the identified optimal operation point (S2030).

As an example, it is assumed that the artificial intelligence analysis performed by the electronic device 100 is a face recognition operation. The electronic device 100 may detect a face of a person included in input data and obtain detailed information on the detected face (information indicating who the detected face is). It is assumed that only 7 faces may be currently analyzed based on the resources of the artificial intelligence module performed in the electronic device 100. However, it is assumed that 15 faces are detected in the input data. The electronic device 100 analyzes only the faces of 7 people and needs to perform an analysis operation on the faces of 8 people after the faces of 7 people have been analyzed. Here, it is assumed that the user considers the processing speed more important than the quality of the processing result. The electronic device 100 may identify an optimal operation point and change an existing operation point so that as many faces as possible may be analyzed at the same time. Specifically, in order to increase the processing speed, the electronic device 100 may perform artificial intelligence analysis using only weight information corresponding to a minimum class. If the artificial intelligence analysis is performed using only the weight information corresponding to the minimum class, the accuracy may decrease, but the processing speed may be increased, and as a result, the electronic device 100 that operates according to a user's intention may be implemented.

As another example, it is assumed that the artificial intelligence analysis performed by the electronic device 100 is an operation of performing a low power mode in relation to power consumption. The electronic device 100 may identify an optimal operation point based on the power consumption and the quality of the processing result. Meanwhile, the electronic device 100 may identify the optimal operation point based on at least one of a change in power usage according to a decrease in an operation frequency and a power cut off.

As still another example, the operation point may be determined based on at least one of accuracy, latency, and duration. A real-time concept may be important for a task related to autonomous driving or video playback. Therefore, when the task related to the autonomous driving or the video playback, the electronic device 100 may identify the operation point in consideration of the latency as the largest and subsequent the accuracy. Here, as the latency is lower, it may be determined that the user satisfaction is high, and as the accuracy is high, it may be determined that the user satisfaction is high. In addition, the electronic device 100 may identify the operation point by setting minimum latency or minimum accuracy. For example, the electronic device 100 may identify the operation point in consideration of the fact that the latency is at least 33 ms or less.

Meanwhile, for tasks related to face recognition, iris recognition, and fingerprint recognition, the accuracy may be important. Therefore, when the tasks related to the face recognition, the iris recognition, and the fingerprint recognition, the electronic device 100 may identify the operation point in consideration of the accuracy as the largest and subsequent the duration. Here, as the accuracy is high, it may be determined that the user satisfaction is high. Here, the electronic device 100 may identify the operation point by setting minimum accuracy. For example, the electronic device 100 may identify the operation point in consideration of the fact that a minimum accuracy is 95% or more.

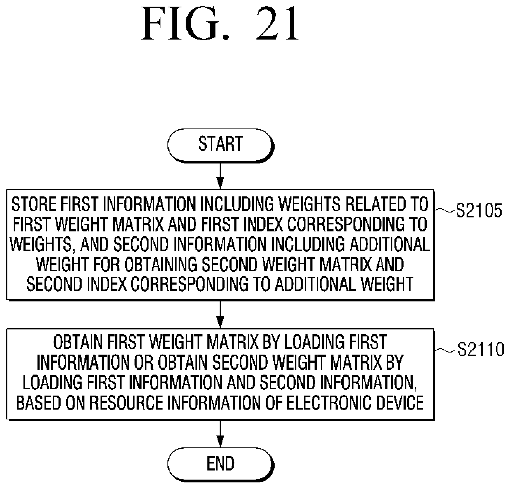

FIG. 21 is a diagram for describing a control method of an electronic device according to an embodiment of the disclosure.

Meanwhile, in a control method of the electronic device 100, first information including a weight related to a first weight matrix and a first index corresponding to the weight, and second information including an additional weight for obtaining a second weight matrix and a second index corresponding to the additional weight may be stored (S2105). In addition, in the control method, the first weight matrix is obtained by loading the first information based on resource information of the electronic device 100, or the second weight matrix is obtained by loading the first information and the second information (S2110).

Here, the control method may further include obtaining output data by inputting input data to an artificial intelligence model using the first weight matrix or the second weight matrix, and obtaining the second weight matrix based on the first weight matrix or obtaining the first weight matrix based on the second weight matrix, on the basis of the resource information of the electronic device 100 being changed.

Meanwhile, the second weight matrix may be obtained based on the weights and the first index included in the first information, the additional weight, and the second index.

Meanwhile, the electronic device 100 obtains second weight information (or second information) corresponding to a second class, and the second weight information includes a weight included in the second class and a second index corresponding to the weight included in the second class.

The electronic device 100 obtains the first weight matrix based on the first weight information. Here, the first weight matrix is obtained using only the first class and may be a matrix to which a relatively high weight is reflected.

The electronic device 100 obtains the second weight matrix based on the first weight information and the second weight information. Here, the second weight matrix is obtained using the first class and the second class.

The second weight matrix is obtained based on a weight, a first index, an additional weight, and a second index included in the first weight information.

Here, the weight included in the first weight information refers to the weight included in the first class and the first index may refer to an index corresponding to the weight included in the first class. In addition, the additional weight refers to the weight included in the second class and the second index may refer to an index corresponding to the weight included in the second class.

Here, in the obtaining of the second weight matrix, the second weight matrix is obtained by combining the additional weight with the weight included in the first weight information based on the first index and the second index.

The first index and the weight included in the first weight information is information related to the first class, and the second index and the additional weight is related to the second class. As a result, the electronic device 100 generates new weight information by combining the first weight information and the second weight information, and generates a new weight matrix based on the newly generated weight information.

Here, in the obtaining of the second weight matrix, a position of a weight corresponding to the first index in the second weight matrix may be determined based on the first index, a position of an additional weight corresponding to the second index in the second weight matrix may be determined based on the second index, at least one of the first index or the second index may be changed based on the position of the weight corresponding to the first index and the position of the weight corresponding to the second index, and the second weight matrix may be obtained based on the position of the weight, the position of the additional weight, and the changed index.

The resource information may refer to information related to a resource of the electronic device 100 and a required resource required to execute a specific module (or a specific operation).

Here, the resource information may include at least one of an internal memory capacity (total capacity, used capacity, available capacity) of the electronic device 100, a power state of the electronic device 100, a resource of an application executed in the electronic device 100, or a resource of an artificial intelligence model executed in the electronic device 100.

As an example, the resource information may include a required resource corresponding to the power state of the electronic device 100. When the power state of the electronic device 100 is in a high-performance mode, the required resource may be large. However, when the power state of the electronic device 100 is in a power saving mode, the required resource may be small. Because the required resource may vary according to the power state of the electronic device 100, the electronic device 100 may determine whether to load the first information or both the first information and the second information based on resource information corresponding to the power state of the electronic device 100.

As another example, the resource information may include a required resource according to an application executed in the electronic device 100. When the application executed in the electronic device 100 analyzes an artificial intelligence module, the required resource may be large. However, when the application executed in the electronic device 100 is a program related to an alarm function, the required resource may be small. Because the required resource may vary according to the resource of the application executed in the electronic device 100, the electronic device 100 may determine whether to load the first information or both the first information and the second information based on resource information corresponding to the application executed in the electronic device 100.

As still another example, in the resource information, a required resource corresponding to the resource of the artificial intelligence model executed in the electronic device 100 may vary. The varying of the resource of the artificial intelligence model may refer to that an analysis operation varies. In the case of an artificial intelligence model related to image recognition, the required resource may be large. However, in the case of an artificial intelligence model related to text recognition, the required resource may be small. Because the required resource may vary according to the resource of the artificial intelligence model executed in the electronic device 100, the electronic device 100 determines whether to load the first information or both the first information and the second information based on resource information corresponding to the resource of the artificial intelligence model executed in the electronic device 100.

Meanwhile, the electronic device 100 determines whether to use weight information (first information) corresponding to the first class, or whether to use weight information (second information) corresponding to the first class and the second class, based on the resource information.

The electronic device 100 may already store information on necessary resources when using the weight information corresponding to the first class and necessary resources when using the weight information corresponding to the first class and the second class. Therefore, the electronic device 100 determines whether to use the weight information corresponding to the first class or whether to use the weight information corresponding to the first class and the second class based on a required resource for performing a specific operation.

As an example, it is assumed that there are two classes. It is assumed that the resource is 40 when using only the first class, and the resource is 80 when using both the first class and the second class. In addition, it is assumed that the available resource of the current internal memory is 60. The electronic device 100 determines to use a specific class combination (when using only the first class) having a resource smaller than the available resource (60) of the current internal memory. The available resource may refer to the capacity that may be processed additionally in the current internal memory, and the class-specific resource (or class combination-specific resource) may refer to resource information according to a plurality of class combinations.

The diverse examples related to the resource information are described in FIGS. 17 to 19.

Meanwhile, the electronic device 100 may also be using only the weight information corresponding to the second class. However, artificial intelligence analysis being performed with only low weights may not be common in that the first class is a weight group including relatively high weights and the second class is a weight group including relatively low weights. This is because if artificial intelligence analysis needs to be performed with insufficient resources, analysis accuracy is increased only when the class including the high weights is used. Therefore, the disclosure describes in detail an embodiment using only weight information corresponding to the first class, which is a relatively high weight group.

An example in which the resource information is changed may include an increase and a decrease in the resource information. Among the two cases, an actual problem may be a case of the increase in the resource. Because the decrease in the resource information is an increase in the available resource of the existing internal memory, there is no problem with the processing operation, but because the increase in the resource information is a decrease in the available resource, a problem may occur with respect to the processing capacity when a resource operation that is larger than the available resource is performed.

Therefore, the electronic device 100 determines the available resource of the internal memory and a resource required for artificial intelligence analysis in real time. When the resource required for artificial intelligence analysis is larger than the available resource of the internal memory, the electronic device 100 obtains a new weight matrix. In order to obtain the new weight matrix, the electronic device 100 considers the class-specific resource and the available resource. That is, the electronic device 100 obtains a weight matrix based on an identified class combination by identifying a class combination in which artificial intelligence analysis may be performed in the available resource.

Meanwhile, the example in which the resource information is increased may include a case in which the target of artificial intelligence analysis suddenly increases and the resource increases, and a case in which the user wants to change from an artificial intelligence module with high processing speed to a high quality artificial intelligence module. In addition, the example in which the resource information is decreased may include a case in which the target of artificial intelligence analysis decreases and the resource decreases, and a case in which the user wants to change from a high quality artificial intelligence module to an artificial intelligence module with high processing speed. A detailed description of the example in which the resource is changed has been described in FIG. 6A.

Meanwhile, the first information includes weights of a second threshold value or more in information obtained by pruning weights less than a first threshold value in the weight information and an index corresponding to the weights of the second threshold value or more, and the second information includes weights less than the second threshold value in the information obtained by pruning and an index corresponding to the weights less than the second threshold value.

Here, the first information includes weights obtained by performing a first training for the weights of the second threshold value or more in the information obtained by pruning and an index corresponding to the weights obtained by performing the first training, the second information includes weights obtained by performing a second training for the weights of the second threshold value or more and the weights less than the second threshold value in the information obtained by pruning and an index corresponding to the weights obtained by performing the second training, and the weights of the second threshold value or more may be fixed during the second training. In addition, the control method may further include changing the first information by performing a first training based on the first information, changing the second information by performing a second training based on the first information and the second information, and obtaining the first weight matrix by loading the changed first information or obtaining the second weight matrix by loading the changed first information and the changed second information. In addition, the control method may further include obtaining weights by performing a first training for the weights of the second threshold value or more in the information obtained by pruning, obtaining an index corresponding to the weights obtained by performing the first training, changing the weights and the index included in the first information to the weights obtained by performing the first training and the index corresponding to the weights obtained by performing the first training, obtaining weights less than the second threshold value in the weights by performing a second training for the weights obtained by performing the first training and the weights less than the second threshold value in the information obtained by pruning, obtaining an index corresponding to the weights less than the second threshold value in the weights obtained by performing the second training, changing the weights and the index included in the second information to the weights less than the second threshold value in the weights obtained by performing the second training and the index corresponding to the weights less than the second threshold value in the weights obtained by performing the second training, obtaining the first weight matrix by loading the changed first information or obtaining the second weight matrix by loading the changed first information and the changed second information. In addition, the weights of the second threshold value or more are fixed during the second training.

Meanwhile, the control method further includes obtaining the first weight matrix by erasing an additional weight corresponding to the second index from third information based on weights included in the third information corresponding to the second weight matrix, the third index corresponding to the weights, and the second index.

Here, in the obtaining of the first weight matrix, a position of the additional weight may be determined in the second weight matrix based on the second index and the third index, the additional weight may be erased from the third information based on the position of the additional weight, and the first weight matrix may be obtained by modifying an index of weights adjacent to the position of the erased additional weight in the third information.

Meanwhile, the control method of the electronic device as illustrated in FIG. 21 may be executed on the electronic device having the configuration of FIGS. 1 and 2, and may also be executed on an electronic device having other configurations.

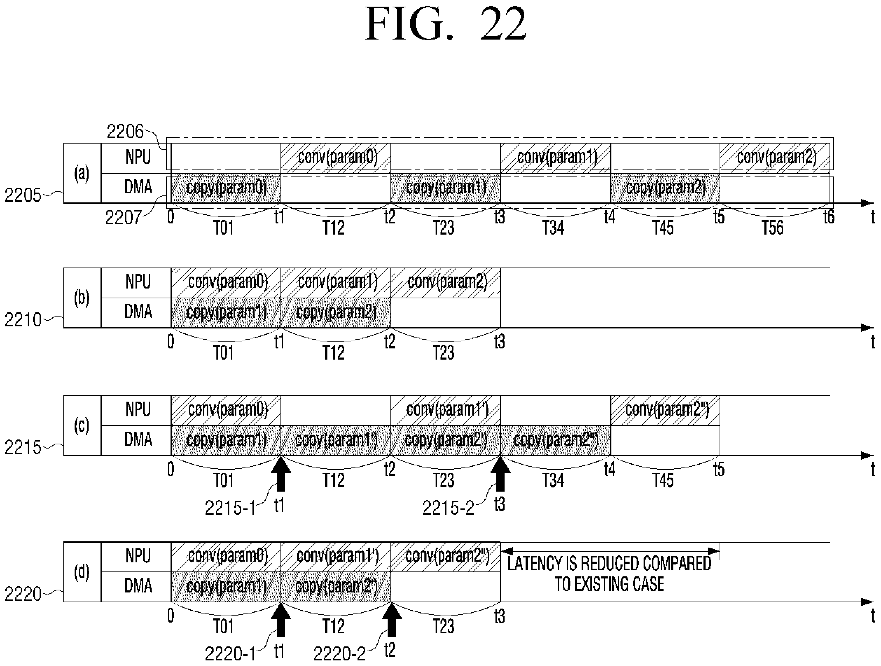

FIG. 22 is a diagram for comparing a change in latency according to a change in an operation point.

Referring to FIG. 22, the electronic device 100 may perform a convolutional operation according to diverse examples. An example (a) is described Table 2205, an example (b) is described in Table 2210, an example (c) is described in Table 2215, and an example (d) is described in Table 2220.

The electronic device 100 may perform an operation 2207 of transmitting a parameter corresponding to a convolutional layer from a DMA to an on-chip memory (SRAM). In addition, the electronic device 100 may perform a convolutional operation using a parameter corresponding to the convolutional layer through the kernel generator included in the NPU (2206). Meanwhile, the NPU may include the kernel generator and the on-chip memory (SRAM). The on-chip memory (SRAM) may store parameter information corresponding to a specific layer, and the kernel generator may perform a convolutional operation using the parameter information stored in the on-chip memory (SRAM).

Meanwhile, the operations indicated by the areas 2206 and 2207 are applied equally to the table 2205 as well as the remaining tables 2210, 2215, and 2220, and thus redundant descriptions are omitted.

Meanwhile, the tables 2205 to 2220 of FIG. 22 may be sorted into regular time intervals (section T01, section T12, section T23, section T34, section T45, and section T56). For example, the T01 section may refer to a time section from 0 to a time point t1.

Referring to table 2205, the electronic device 100 may transmit parameter information (param0) corresponding to a base layer from the DMA to the on-chip memory (SRAM) included in the NPU in the section T01.

In addition, the electronic device 100 may perform the convolutional operation using the parameter information (param0) corresponding to the base layer through the kernel generator included in the NPU in the section T12.

In addition, the electronic device 100 transmits parameter information (param1) corresponding to a first layer from the DMA to the on-chip memory (SRAM) included in the NPU in the section T23.

In addition, the electronic device 100 may perform the convolutional operation using the parameter information (param1) corresponding to the first layer through the kernel generator included in the NPU in the section T34.

Because the operations for the section T45 and the section T56 are repeated from the previous operation, redundant descriptions are omitted.

The total operation time corresponding to the example (a) according to the table 2205 may be t6. In the example (a) described in the table 2205, the operation of receiving the parameter information from the DMA and the operation of performing the convolutional operation in the kernel generator included in the NPU are performed in separate time sections, and thus a processing time may be long.

Meanwhile, in the example (b) according to the table 2210, the electronic device 100 may perform the operation for transmitting the parameter information and the convolutional operation in the same time section. Specifically, the electronic device 100 may perform the convolutional operation using the parameter information (param0) corresponding to the base layer through the kernel generator included in the NPU in the section T01. In addition, the electronic device 100 may transmit parameter information (param1) corresponding to a first layer from the DMA to the on-chip memory (SRAM) included in the NPU in the section T01.

In addition, the electronic device 100 may perform the convolutional operation using the parameter information (param1) corresponding to the first layer through the kernel generator included in the NPU in the section T12. In addition, the electronic device 100 transmits parameter information (param2) corresponding to a second layer from the DMA to the on-chip memory (SRAM) included in the NPU in the section T12.

In addition, the electronic device 100 may perform the convolutional operation using the parameter information (param2) corresponding to the second layer through the kernel generator included in the NPU in the section T23.

The total operation time corresponding to the example (b) according to the table 2210 may be t3. This may be an operation time of a size smaller than that of the example (a) of table 2205.

On the other hand, the example (c) according to the table 2215 is an example for describing a case in which an operation point is changed. The electronic device 100 may perform the convolutional operation using the parameter information (param0) corresponding to the base layer through the kernel generator included in the NPU in the section T01. In addition, the electronic device 100 transmits parameter information (param1) corresponding to a first layer from the DMA to the on-chip memory (SRAM) included in the NPU in the section T01. Here, it is assumed that there is a first operation point change 2215-1 at a time point t1.

If it is identified that there is a first operation point change 2215-1, the electronic device 100 transmits parameter information (param1') corresponding to a changed first layer from the DMA to the on-chip memory (SRAM) included in the NPU in the section T12.

In addition, the electronic device 100 may perform the convolutional operation using the parameter information (param1') corresponding to the changed first layer through the kernel generator included in the NPU in the section T23. In addition, the electronic device 100 transmits parameter information (param2') corresponding to a changed second layer from the DMA to the on-chip memory (SRAM) included in the NPU in the section T23. Here, it is assumed that there is a second operation point change 2215-2 at a time point t3.

If it is identified that there is a second operation point change 2215-2, the electronic device 100 transmits parameter information (param2") corresponding to a re-changed second layer from the DMA to the on-chip memory (SRAM) included in the NPU in the section T34.

In addition, the electronic device 100 may perform the convolutional operation using the parameter information (param2") corresponding to the re-changed second layer through the kernel generator included in the NPU in the section T45.

The total operation time corresponding to the example (c) according to the table 2215 may be t5. In the example (c) according to the table 2215, new parameter information may be received from the DMA whenever the operation point is changed. In this case, it may take time in a process of receiving the new parameter information.

On the other hand, the example (d) according to the table 2220 is an example for describing a process of performing a convolutional operation without receiving new parameter information from the DMA when there is an operation point change.

The electronic device 100 may perform the convolutional operation using the parameter information (param0) corresponding to the base layer through the kernel generator included in the NPU in the section T01. In addition, the electronic device 100 may transmit parameter information (param1) corresponding to a first layer from the DMA to the on-chip memory (SRAM) included in the NPU in the section T01. Here, it is assumed that there is a first operation point change 2220-1 at a time point t1.

If it is identified that there is a first operation point change 2220-1, the electronic device 100 may obtain the parameter information (param1') corresponding to the changed first layer based on the parameter information (param1) corresponding to the first layer through the kernel generator included in the NPU in the section T12. In addition, the electronic device 100 may perform the convolutional operation using the parameter information (param1') corresponding to the changed first layer through the kernel generator included in the NPU in the section T12. In addition, the electronic device 100 transmits parameter information (param2') corresponding to a changed second layer from the DMA to the on-chip memory (SRAM) included in the NPU in the section T12. Here, it is assumed that there is a second operation point change 2220-2 at a time point t2.

If it is identified that there is a second operation point change 2220-2, the electronic device 100 obtains parameter information (param2") corresponding to a re-changed second layer based on the parameter information (param2') corresponding to the changed second layer through the kernel generator included in the NPU in the section T23. In addition, the electronic device 100 may perform the convolutional operation using the parameter information (param2") corresponding to the re-changed second layer through the kernel generator included in the NPU in the section T23.

The total operation time corresponding to the example (d) according to the table 2220 may be t3. Unlike the example (c) according to the table 2215, in the example (d), new parameter information may not be received from the DMA. In the example (d), latency may be reduced by newly generating the new parameter information using previously received parameter information.

On the other hand, the methods according to the diverse embodiments of the disclosure described above may be implemented in the form of an application installable on an existing electronic device.

In addition, the methods according to the diverse embodiments of the disclosure described above may be implemented by only upgrading software or hardware of the existing electronic device.

In addition, the diverse embodiments of the disclosure described above may also be performed through an embedded server included in the electronic device, or an external server of at least one of the electronic device or the display device.

Meanwhile, according to an embodiment of the disclosure, the diverse embodiments described hereinabove may be implemented by software including instructions that are stored in machine (e.g., a computer)-readable storage media. The machine is a device that invokes the stored instructions from the storage media and is operable according to the invoked instructions, and may include the electronic device (e.g., an electronic device A) according to the disclosed embodiments. When the instructions are executed by the processor, the processor may perform functions corresponding to the instructions, either directly or using other components under the control of the processor. The instructions may include codes generated or executed by a compiler or an interpreter. The machine-readable storage medium may be provided in the form of non-transitory storage medium. Here, the term 'non-transitory' means that the storage medium does not include a signal and is tangible, but does not distinguish whether data is stored semi-permanently or temporarily in the storage medium.

In addition, according to an embodiment of the disclosure, the method according to the diverse embodiments described above may be included and provided in a computer program product. The computer program product may be traded as a product between a seller and a purchaser. The computer program product may be distributed in the form of a storage medium (for example, a compact disc read only memory (CD-ROM)) that may be read by a device, or online through an application store (for example, PlayStoreTM). In the case of the online distribution, at least a portion of the computer program product may be at least temporarily stored in a storage medium such as a memory of a server of a manufacturer, a server of an application store, or a relay server, or be temporarily generated.

In addition, each of the components (e.g., modules or programs) according to the diverse embodiments described above may include a single entity or a plurality of entities, and some sub-components of the sub-components described above may be omitted, or other sub-components may be further included in the diverse embodiments. Alternatively or additionally, some components (e.g., modules or programs) may be integrated into one entity to perform the same or similar functions performed by the respective components prior to the integration. The operations performed by the module, the program, or other component according to the diverse embodiments may be performed in a sequential, parallel, iterative, or heuristic manner, or at least some operations may be executed in a different order or omitted, or other operations may be added.

Although the embodiments of the disclosure have been illustrated and described hereinabove, the disclosure is not limited to the abovementioned specific embodiments, but may be variously modified by those skilled in the art to which the disclosure pertains without departing from the scope of the accompanying claims. Such modifications should not be individually understood from the prospect of the disclosure.

Although the present disclosure has been described with various embodiments, various changes and modifications may be suggested to one skilled in the art. It is intended that the present disclosure encompass such changes and modifications as fall within the scope of the appended claims.

## Claims

1. An electronic device (100) comprising:
a memory (110, 501, 601) configured to store first information (410, 510) and second information (415, 515);
an on-chip memory (502, 604, 1530); and
a processor (120) configured to:
obtain resource information of the electronic device (100) indicating a current availability of resources of the electronic device to execute an artificial intelligence model;
determine, based on the resource information, whether the current availability of resources of the electronic device is sufficient to execute the artificial intelligence model;
when the current availability of resources of the electronic device is insufficient,
generate, for use by the artificial intelligence model, a first weight matrix by loading, from the memory (110, 501, 601), the first information (410, 510) in the on-chip memory (502, 604, 1530) and execute, on the electronic device, the artificial intelligence model based on the first weight matrix; and
when the current availability of resources of the electronic device is sufficient,
generate, for use by the artificial intelligence model, a second weight matrix (525) by loading, from the memory (110, 501, 601), the first information (410, 510) and the second information (415, 515) in the on-chip memory (502, 604, 1530) and execute, on the electronic device (100), the artificial intelligence model based on the second weight matrix,
wherein the first information (410, 510) includes weights (407-1,407-2) related to the first weight matrix and a first index (411-1,411-2) corresponding to the weights (407-1,407-2), and
wherein the second information (415, 515) includes an additional weight (407-3) for obtaining the second weight matrix (525) and a second index (411-3) corresponding to the additional weight (407-3);
wherein the processor is configured to generate the second weight matrix (525) by combining the additional weight (407-3) with the weights (407-1,407-2) included in the first information (410,510) based on the first index (411-1,411-2) and the second index (411-3).

2. The electronic device as claimed in claim 1, wherein the processor is configured to:
obtain output data by inputting input data to an artificial intelligence model using the first weight matrix or the second weight matrix (525), and
generate the second weight matrix (525) based on the first weight matrix or generate the first weight matrix based on the second weight matrix (525), on a basis of the resource information of the electronic device being changed.

3. The electronic device as claimed in claim 1, wherein the processor is configured to:
determine a position of a weight corresponding to the first index (411-1,411-2) in the second weight matrix (525) based on the first index (411-1,411-2),
determine a position of the additional weight (407-3) corresponding to the second index (411-3) in the second weight matrix (525) based on the second index (411-3),
change at least one of the first index (411-1,411-2) or the second index (411-3) based on the position of the weight corresponding to the first index (411-1,411-2) and the position of the weight corresponding to the second index (411-3), and
generate the second weight matrix (525) based on the positions of the weights (407-1,407-2), the position of the additional weight (407-3), and the changed index.

4. The electronic device as claimed in claim 1, wherein the resource information includes at least one of an available capacity of an internal memory of the electronic device, a power state of the electronic device, a resource of an application executed in the electronic device, or a resource of an artificial intelligence model executed in the electronic device.

5. The electronic device as claimed in claim 1, wherein the first information (410, 510) includes the weights (407-1, 407-2) of a second threshold value or more in information obtained by pruning weights (406-1, 406-2) less than a first threshold value in weight information (405) and the first index (411-1,411-2) corresponding to the weights (407-1, 407-2) of the second threshold value or more, and
the second information (415, 515) includes the additional weight (407-3) less than the second threshold value in the information obtained by the pruning and the second index (411-3) corresponding to the additional weight (407-3) less than the second threshold value.

6. The electronic device as claimed in claim 5, wherein the processor is configured to:
change the first information (410, 510) by performing a first training of the first information (410, 510),
change the second information (415, 515) by performing a second training of the first information (410, 510) and the second information (415, 515), and
generate the first weight matrix by loading the changed first information or obtain the second weight matrix (525) by loading the changed first information and the changed second information.

7. The electronic device as claimed in claim 1, wherein the processor is configured to generate the first weight matrix (530) by erasing the additional weight (407-3, 515-2, 525-4) corresponding to the second index (411-3,515-1) from third information based on weights (525-2, 525-4, 525-6) included in the third information corresponding to the second weight matrix (525), a third index (525-1, 525-3, 525-5) corresponding to the weights (525-2, 525-4, 525-6), and the second index (411-3, 515-1).

8. The electronic device as claimed in claim 7, wherein the processor is configured to:
determine a position of the additional weight (407-3, 515-2, 525-4) in the second weight matrix (525) based on the second index (411-3, 515-1) and the third index (525-1, 525-3, 525-5),
erase the additional weight (407-3, 515-2, 525-4) from the third information based on the position of the additional weight (407-3, 515-2, 525-4), and
generate the first weight matrix (530) by modifying an index (525-3, 525-5) adjacent to the position of the erased additional weight (407-3, 515-2, 525-4) in the third information.

9. A control method of an electronic device in which first information (410, 510) and second information (415, 515) are stored, the control method comprising:
obtaining resource information of the electronic device indicating a current availability of resources of the electronic device to execute an artificial intelligence model;
determining, based on the resource information, whether the current availability of resources of the electronic device is sufficient to execute the artificial intelligence model;
when the current availability of resources of the electronic device is insufficient,
generating, for use by the artificial intelligence model, a first weight matrix by loading, from a memory (110, 501, 601) of the electronic device, the first information (410, 510) in an on-chip memory (502, 604, 1530) of the electronic device and executing, on the electronic device, the artificial intelligence model based on the first weight matrix, and when the current availability of resources of the electronic device is sufficient,
generating, for use by the artificial intelligence model, a second weight matrix (525) by loading, from the memory (110, 510, 601), the first information (410, 510) and the second information (415, 515) in the on-chip memory (502, 604, 1530) and executing, on the electronic device, the artificial intelligence model based on the second weight matrix,
wherein the first information (410, 510) includes weights (407-1,407-2) related to the first weight matrix and a first index (411-1,411-2) corresponding to the weights (407-1,407-2),
the second information (415, 515) includes an additional weight (407-3) for obtaining the second weight matrix (525) and a second index (411-3) corresponding to the additional weight (407-3), and
wherein in the generating of the second weight matrix (525), the second weight matrix (525) is generated by combining the additional weight (407-3) to the weights (407-1,407-2) included in the first information (410, 510) based on the first index (411-1,411-2) and the second index (411-3).

10. The control method as claimed in claim 9, further comprising:
obtaining output data by inputting input data to an artificial intelligence model using the first weight matrix or the second weight matrix (525), and
generating the second weight matrix (525) based on the first weight matrix or generating the first weight matrix based on the second weight matrix (525), on a basis of the resource information of the electronic device being changed.

11. The control method as claimed in claim 9, wherein in the generating of the second weight matrix (525), a position of a weight corresponding to the first index (411-1,411-2) is determined in the second weight matrix (525) based on the first index (411-1,411-2),
a position of the additional weight (407-3) corresponding to the second index (411-3) is determined in the second weight matrix (525) based on the second index (411-3),
at least one of the first index (411-1,411-2) or the second index (411-3) is changed based on the position of the weight corresponding to the first index (411-1,411-2) and the position of the weight corresponding to the second index (411-3), and
the second weight matrix (525) is generated based on the positions of the weights (407-1,407-2), the position of the additional weight (407-3), and the changed index.

## Patentansprüche

1. Elektronische Vorrichtung (100), umfassend:
einen Speicher (110, 501, 601), der konfiguriert ist, um erste Informationen (410, 510) und zweite Informationen (415, 515) zu speichern;
einen On-Chip-Speicher (502, 604, 1530); und
einen Prozessor (120), der konfiguriert ist zum:
Erhalten von Ressourceninformationen der elektronischen Vorrichtung (100), die eine aktuelle Verfügbarkeit von Ressourcen der elektronischen Vorrichtung zum Ausführen eines Modells der künstlichen Intelligenz anzeigen;
Bestimmen, basierend auf den Ressourceninformationen, ob die aktuelle Verfügbarkeit von Ressourcen der elektronischen Vorrichtung ausreichend ist, um das Modell der künstlichen Intelligenz auszuführen;
wenn die aktuelle Verfügbarkeit von Ressourcen der elektronischen Vorrichtung unzureichend ist,
Erzeugen einer ersten Gewichtsmatrix zur Verwendung durch das Modell der künstlichen Intelligenz durch Laden der ersten Informationen (410, 510) aus dem Speicher (110, 501, 601) in den On-Chip-Speicher (502, 604, 1530) und Ausführen des Modells der künstlichen Intelligenz auf der elektronischen Vorrichtung basierend auf der ersten Gewichtsmatrix; und
wenn die aktuelle Verfügbarkeit von Ressourcen der elektronischen Vorrichtung ausreichend ist,
Erzeugen einer zweiten Gewichtsmatrix (525) zur Verwendung durch das Modell der künstlichen Intelligenz durch Laden der ersten Informationen (410, 510) und der zweiten Informationen (415, 515) aus dem Speicher (110, 501, 601) in den On-Chip-Speicher (502, 604, 1530) und Ausführen des Modells der künstlichen Intelligenz auf der elektronischen Vorrichtung (100) basierend auf der zweiten Gewichtsmatrix,
wobei die ersten Informationen (410, 510) Gewichte (407-1, 407-2) in Bezug auf die erste Gewichtsmatrix und einen ersten Index (411-1, 411-2) entsprechend den Gewichten (407-1, 407-2) enthalten, und
wobei die zweiten Informationen (415, 515) ein zusätzliches Gewicht (407-3) zum Erhalten der zweiten Gewichtsmatrix (525) und einen zweiten Index (411-3) entsprechend dem zusätzlichen Gewicht (407-3) enthalten;
wobei der Prozessor konfiguriert ist, um die zweite Gewichtsmatrix (525) durch Kombinieren des zusätzlichen Gewichts (407-3) mit den Gewichten (407-1, 407-2), die in den ersten Informationen (410, 510) enthalten sind, basierend auf dem ersten Index (411-1, 411-2) und dem zweiten Index (411-3) zu erzeugen.

2. Elektronische Vorrichtung nach Anspruch 1, wobei der Prozessor konfiguriert ist zum:
Erhalten von Ausgabedaten durch Eingeben von Eingabedaten in ein Modell der künstlichen Intelligenz unter Verwendung der ersten Gewichtsmatrix oder der zweiten Gewichtsmatrix (525), und
Erzeugen der zweiten Gewichtsmatrix (525) basierend auf der ersten Gewichtsmatrix oder Erzeugen der ersten Gewichtsmatrix basierend auf der zweiten Gewichtsmatrix (525) basierend darauf, dass die Ressourceninformationen der elektronischen Vorrichtung geändert werden.

3. Elektronische Vorrichtung nach Anspruch 1, wobei der Prozessor konfiguriert ist zum:
Bestimmen einer Position eines dem ersten Index (411-1, 411-2) entsprechenden Gewichts in der zweiten Gewichtsmatrix (525) basierend auf dem ersten Index (411-1, 411-2),
Bestimmen einer Position des zusätzlichen Gewichts (407-3), das dem zweiten Index (411-3) in der zweiten Gewichtsmatrix (525) entspricht, basierend auf dem zweiten Index (411-3),
Ändern mindestens eines des ersten Index (411-1, 411-2) oder des zweiten Index (411-3) basierend auf der Position des dem ersten Index (411-1, 411-2) entsprechenden Gewichts und der Position des dem zweiten Index (411-3) entsprechenden Gewichts, und
Erzeugen der zweiten Gewichtsmatrix (525) basierend auf den Positionen der Gewichte (407-1, 407-2), der Position des zusätzlichen Gewichts (407-3) und dem geänderten Index.

4. Elektronische Vorrichtung nach Anspruch 1, wobei die Ressourceninformationen mindestens eines von einer verfügbaren Kapazität eines internen Speichers der elektronischen Vorrichtung, einem Leistungszustand der elektronischen Vorrichtung, einer Ressource einer in der elektronischen Vorrichtung ausgeführten Anwendung oder einer Ressource eines in der elektronischen Vorrichtung ausgeführten Modells der künstlichen Intelligenz umfassen.

5. Elektronische Vorrichtung nach Anspruch 1, wobei die ersten Informationen (410, 510) die Gewichte (407-1, 407-2) eines zweiten Schwellenwerts oder mehr in den Informationen umfassen, die durch Beschneiden von Gewichten (406-1, 406-2), die kleiner als ein erster Schwellenwert in den Gewichtsinformationen (405) sind, und den ersten Index (411-1, 411-2), der den Gewichten (407-1, 407-2) des zweiten Schwellenwerts oder mehr entspricht, erhalten werden, und
die zweiten Informationen (415, 515) das zusätzliche Gewicht (407-3), das kleiner als der zweite Schwellenwert ist, in den durch das Beschneiden erhaltenen Informationen und den zweiten Index (411-3), der dem zusätzlichen Gewicht (407-3), das kleiner als der zweite Schwellenwert ist, entspricht, umfassen.

6. Elektronische Vorrichtung nach Anspruch 5, wobei der Prozessor konfiguriert ist zum:
Ändern der ersten Informationen (410, 510) durch Ausführen eines ersten Trainings der ersten Informationen (410, 510),
Ändern der zweiten Informationen (415, 515) durch Durchführen eines zweiten Trainings der ersten Informationen (410, 510) und der zweiten Informationen (415, 515), und
Erzeugen der ersten Gewichtsmatrix durch Laden der geänderten ersten Informationen oder Erhalten der zweite Gewichtsmatrix (525) durch Laden der geänderten ersten Informationen und der geänderten zweiten Informationen.

7. Elektronische Vorrichtung nach Anspruch 1, wobei der Prozessor konfiguriert ist, um die erste Gewichtsmatrix (530) zu erzeugen, indem er das zusätzliche Gewicht (407-3, 515-2, 525-4), das dem zweiten Index (411-3, 515-1) entspricht, aus den dritten Informationen basierend auf den Gewichten (525-2, 525-4, 525-6), die in den dritten Informationen enthalten sind, die der zweiten Gewichtsmatrix (525), einem dritten Index (525-1, 525-3, 525-5), der den Gewichten (525-2, 525-4, 525-6) entspricht, und dem zweiten Index (411-3, 515-1) entsprechen.

8. Elektronische Vorrichtung nach Anspruch 7, wobei der Prozessor konfiguriert ist zum:
Bestimmen einer Position des zusätzlichen Gewichts (407-3, 515-2, 525-4) in der zweiten Gewichtsmatrix (525) basierend auf dem zweiten Index (411-3, 515-1) und dem dritten Index (525-1, 525-3, 525-5),
Löschen des zusätzlichen Gewichts (407-3, 515-2, 525-4) aus den dritten Informationen basierend auf der Position des zusätzlichen Gewichts (407-3, 515-2, 525-4), und
Erzeugen der ersten Gewichtsmatrix (530) durch Modifizieren eines Index (525-3, 525-5) benachbart zur Position des gelöschten zusätzlichen Gewichts (407-3, 515-2, 525-4) in den dritten Informationen.

9. Verfahren zum Steuern einer elektronischen Vorrichtung, in der erste Informationen (410, 510) und zweite Informationen (415, 515) gespeichert sind, wobei das Steuerungsverfahren umfasst:
Erhalten von Ressourceninformationen der elektronischen Vorrichtung, die eine aktuelle Verfügbarkeit von Ressourcen der elektronischen Vorrichtung zum Ausführen eines Modells der künstlichen Intelligenz anzeigen;
Bestimmen, basierend auf den Ressourceninformationen, ob die aktuelle Verfügbarkeit von Ressourcen der elektronischen Vorrichtung ausreichend ist, um das Modell der künstlichen Intelligenz auszuführen;
wenn die derzeitige Verfügbarkeit von Ressourcen der elektronischen Vorrichtung unzureichend ist,
Erzeugen einer ersten Gewichtsmatrix zur Verwendung durch das Modell der künstlichen Intelligenz durch Laden der ersten Informationen (410, 510) aus einem Speicher (110, 501, 601) der elektronischen Vorrichtung in einen On-Chip-Speicher (502, 604, 1530) der elektronischen Vorrichtung und Ausführen des Modells der künstlichen Intelligenz auf der elektronischen Vorrichtung basierend auf der ersten Gewichtsmatrix, und
wenn die aktuelle Verfügbarkeit von Ressourcen der elektronischen Vorrichtung ausreichend ist,
Erzeugen einer zweiten Gewichtsmatrix (525) zur Verwendung durch das Modell der künstlichen Intelligenz durch Laden der ersten Informationen (410, 510) und der zweiten Informationen (415, 515) aus dem Speicher (110, 510, 601) in den On-Chip-Speicher (502, 604, 1530) und Ausführen des Modells der künstlichen Intelligenz auf der elektronischen Vorrichtung basierend auf der zweiten Gewichtsmatrix,
wobei die ersten Informationen (410, 510) Gewichte (407-1, 407-2) in Bezug auf die erste Gewichtsmatrix und einen ersten Index (411-1, 411-2) entsprechend den Gewichten (407-1, 407-2) enthalten,
wobei die zweiten Informationen (415, 515) ein zusätzliches Gewicht (407-3) zum Erhalten der zweiten Gewichtsmatrix (525) und einen zweiten Index (411-3) entsprechend dem zusätzlichen Gewicht (407-3) enthalten, und
wobei beim Erzeugen der zweiten Gewichtsmatrix (525) die zweite Gewichtsmatrix (525) durch Kombinieren des zusätzlichen Gewichts (407-3) mit den in den ersten Informationen (410, 510) enthaltenen Gewichten (407-1, 407-2) basierend auf dem ersten Index (411-1, 411-2) und dem zweiten Index (411-3) erzeugt wird.

10. Steuerungsverfahren nach Anspruch 9, ferner umfassend:
Erhalten von Ausgabedaten durch Eingeben von Eingabedaten in ein Modell der künstlichen Intelligenz unter Verwendung der ersten Gewichtsmatrix oder der zweiten Gewichtsmatrix (525), und
Erzeugen der zweiten Gewichtsmatrix (525) basierend auf der ersten Gewichtsmatrix oder Erzeugen der ersten Gewichtsmatrix basierend auf der zweiten Gewichtsmatrix (525) basierend darauf, dass die Ressourceninformationen der elektronischen Vorrichtung geändert werden.

11. Steuerungsverfahren nach Anspruch 9, wobei beim Erzeugen der zweiten Gewichtsmatrix (525) eine Position eines dem ersten Index (411-1, 411-2) entsprechenden Gewichts in der zweiten Gewichtsmatrix (525) basierend auf dem ersten Index (411-1, 411-2) bestimmt wird,
eine Position des zusätzlichen Gewichts (407-3), das dem zweiten Index (411-3) entspricht, in der zweiten Gewichtsmatrix (525) basierend auf dem zweiten Index (411-3) bestimmt wird,
mindestens einer von dem ersten Index (411-1, 411-2) oder dem zweiten Index (411-3) basierend auf der Position des dem ersten Index (411-1, 411-2) entsprechenden Gewichts und der Position des dem zweiten Index (411-3) entsprechenden Gewichts geändert wird, und
die zweite Gewichtsmatrix (525) basierend auf den Positionen der Gewichte (407-1, 407-2), der Position des zusätzlichen Gewichts (407-3) und dem geänderten Index erzeugt wird.

## Revendications

1. Dispositif électronique (100), comprenant :
une mémoire (110, 501, 601) configurée pour stocker des premières informations (410, 510) et des deuxièmes informations (415, 515) ;
une mémoire sur puce (502, 604, 1530) ; et
un processeur (120) configuré pour :
obtenir des informations de ressources du dispositif électronique (100) indiquant une disponibilité actuelle de ressources du dispositif électronique pour exécuter un modèle d'intelligence artificielle ;
déterminer, en se basant sur les informations de ressources, si la disponibilité actuelle de ressources du dispositif électronique est suffisante pour exécuter le modèle d'intelligence artificielle ;
lorsque la disponibilité actuelle des ressources du dispositif électronique est insuffisante,
générer, pour utilisation par le modèle d'intelligence artificielle, une première matrice de poids en chargeant, à partir de la mémoire (110, 501, 601), les premières informations (410, 510) dans la mémoire sur puce (502, 604, 1530) et exécuter, sur le dispositif électronique, le modèle d'intelligence artificielle sur la base de la première matrice de poids ; et
lorsque la disponibilité actuelle de ressources du dispositif électronique est suffisante,
générer, pour utilisation par le modèle d'intelligence artificielle, une deuxième matrice de poids (525) en chargeant, à partir de la mémoire (110, 501, 601), les premières informations (410, 510) et les deuxièmes informations (415, 515) dans la mémoire sur puce (502, 604, 1530) et exécuter, sur le dispositif électronique (100), le modèle d'intelligence artificielle en se basant sur la deuxième matrice de poids,
dans lequel les premières informations (410, 510) comprennent des poids (407-1,407-2) liés à la première matrice de poids et un premier indice (411-1,411-2) correspondant aux poids (407-1,407-2), et
dans lequel les deuxièmes informations (415, 515) comprennent un poids supplémentaire (407-3) pour l'obtention de la deuxième matrice de poids (525) et un deuxième indice (411-3) correspondant au poids supplémentaire (407-3) ;
dans lequel le processeur est configuré pour générer la deuxième matrice de poids (525) en combinant le poids supplémentaire (407-3) avec les poids (407-1,407-2) inclus dans les premières informations (410,510) sur la base du premier indice (411-1,411-2) et du deuxième indice (411-3).

2. Dispositif électronique de la revendication 1, dans lequel le processeur (130) est configuré pour :
obtenir des données de sortie en entrant des données d'entrée dans un modèle d'intelligence artificielle à l'aide de la première matrice de poids ou de la deuxième matrice de poids (525), et
générer la deuxième matrice de poids (525) sur la base de la première matrice de poids ou générer la première matrice de poids sur la base de la deuxième matrice de poids (525), en se basant sur la modification des informations de ressources du dispositif électronique.

3. Dispositif électronique de la revendication 1, dans lequel le processeur (130) est configuré pour :
déterminer une position d'un poids correspondant au premier indice (411-1,411-2) dans la deuxième matrice de poids (525) en se basant sur le premier indice (411-1,411-2),
déterminer une position du poids supplémentaire (407-3) correspondant au deuxième indice (411-3) dans la deuxième matrice de poids (525) en se basant sur le deuxième indice (411-3),
modifier au moins l'un du premier indice (411-1,411-2) ou du deuxième indice (411-3) sur la base de la position du poids correspondant au premier indice (411-1,411-2) et de la position du poids correspondant au deuxième indice (411-3),
générer la deuxième matrice de poids (525) en se basant sur les positions des poids (407-1,407-2), la position du poids supplémentaire (407-3) et l'indice modifié.

4. Dispositif électronique selon la revendication 1, dans lequel les informations de ressources comprennent au moins un d'une capacité disponible d'une mémoire interne du dispositif électronique, d'un état d'alimentation du dispositif électronique, d'une ressource d'une application exécutée dans le dispositif électronique, ou d'une ressource d'un modèle d'intelligence artificielle exécuté dans le dispositif électronique.

5. Dispositif électronique selon la revendication 1, dans lequel les premières informations (410, 510) comprennent les poids (407-1, 407-2) d'une deuxième valeur seuil ou plus dans les informations obtenues par élagage des poids (406-1, 406-2) inférieurs à une première valeur seuil dans les informations de poids (405) et le premier indice (411-1, 411-2) correspondant aux poids (407-1, 407-2) de la deuxième valeur seuil ou plus, et
les deuxièmes informations (415, 515) comprennent le poids supplémentaire (407-3) inférieur à la deuxième valeur seuil dans les informations obtenues par l'élagage et le deuxième indice (411-3) correspondant au poids supplémentaire (407-3) inférieur à la deuxième valeur seuil.

6. Dispositif électronique de la revendication 5, dans lequel le processeur (130) est configuré pour :
modifier les premières informations (410, 510) en effectuant un premier apprentissage des premières informations (410, 510),
modifier les deuxièmes informations (415, 515) en effectuant un deuxième apprentissage des premières informations (410, 510) et des deuxièmes informations (415, 515), et
générer la première matrice de poids en chargeant les premières informations modifiées ou obtenir la deuxième matrice de poids (525) en chargeant les premières informations modifiées et les deuxièmes informations modifiées.

7. Dispositif électronique selon la revendication 1, dans lequel le processeur est configuré pour générer la première matrice de poids (530) en effaçant le poids supplémentaire (407-3, 515-2, 525-4) correspondant au deuxième indice (411-3,515-1) des troisièmes informations sur la base de poids (525-2, 525-4, 525-6) inclus dans les troisièmes informations correspondant à la deuxième matrice de poids (525), un troisième indice (525-1, 525-3, 525-5) correspondant aux poids (525-2, 525-4, 525-6), et le deuxième indice (411-3, 515-1).

8. Dispositif électronique de la revendication 7, dans lequel le processeur (130) est configuré pour :
déterminer une position du poids supplémentaire (407-3, 515-2, 525-4) dans la deuxième matrice de poids (525) en se basant sur le deuxième indice (411-3, 515-1) et le troisième indice (525-1, 525-3, 525-5),
effacer le poids supplémentaire (407-3, 515-2, 525-4) des troisièmes informations en se basant sur la position du poids supplémentaire (407-3, 515-2, 525-4), et
générer la première matrice de poids (530) en modifiant un indice (525-3, 525-5) adjacent à la position du poids supplémentaire effacé (407-3, 515-2, 525-4) dans les troisièmes informations.

9. Procédé de commande d'un dispositif électronique dans lequel sont stockées des premières informations (410, 510) et des deuxièmes informations (415, 515), le procédé de commande comprenant :
obtenir des informations de ressources du dispositif électronique indiquant une disponibilité actuelle de ressources du dispositif électronique pour exécuter un modèle d'intelligence artificielle ;
déterminer, en se basant sur les informations de ressources, si la disponibilité actuelle de ressources du dispositif électronique est suffisante pour exécuter le modèle d'intelligence artificielle ;
lorsque la disponibilité actuelle des ressources du dispositif électronique est insuffisante,
générer, pour utilisation par le modèle d'intelligence artificielle, une première matrice de poids en chargeant, à partir d'une mémoire (110, 501, 601) du dispositif électronique, les premières informations (410, 510) dans une mémoire sur puce (502, 604, 1530) du dispositif électronique et exécuter, sur le dispositif électronique, le modèle d'intelligence artificielle sur la base de la première matrice de poids, et
lorsque la disponibilité actuelle de ressources du dispositif électronique est suffisante,
générer, pour utilisation par le modèle d'intelligence artificielle, une deuxième matrice de poids (525) en chargeant, à partir de la mémoire (110, 510, 601), les premières informations (410, 510) et les deuxièmes informations (415, 515) dans la mémoire sur puce (502, 604, 1530) et exécuter, sur le dispositif électronique, le modèle d'intelligence artificielle en se basant sur la deuxième matrice de poids,
dans lequel les premières informations (410, 510) comprennent des poids (407-1,407-2) liés à la première matrice de poids et un premier indice (411-1,411-2) correspondant aux poids (407-1,407-2),
les deuxièmes informations (415, 515) comprennent un poids supplémentaire (407-3) pour l'obtention de la deuxième matrice de poids (525) et un deuxième indice (411-3) correspondant au poids supplémentaire (407-3), et
dans lequel, lors de la génération de la deuxième matrice de poids (525), la deuxième matrice de poids (525) est générée en combinant le poids supplémentaire (407-3) aux poids (407-1,407-2) inclus dans les premières informations (410, 510) sur la base du premier indice (411-1,411-2) et du deuxième indice (411-3).

10. Procédé de commande de la revendication 9, comprenant en outre :
obtenir des données de sortie en entrant des données d'entrée dans un modèle d'intelligence artificielle à l'aide de la première matrice de poids ou de la deuxième matrice de poids (525), et
générer la deuxième matrice de poids (525) sur la base de la première matrice de poids ou générer la première matrice de poids sur la base de la deuxième matrice de poids (525), en se basant sur la modification des informations de ressources du dispositif électronique.

11. Procédé de commande de la revendication 9, dans lequel lors de la génération de la deuxième matrice de poids (525), une position d'un poids correspondant au premier indice (411-1,411-2) est déterminée dans la deuxième matrice de poids (525) en se basant sur le premier indice (411-1,411-2),
une position du poids supplémentaire (407-3) correspondant au deuxième indice (411-3) est déterminée dans la deuxième matrice de poids (525) en se basant sur le deuxième indice (411-3),
au moins un du premier indice (411-1,411-2) ou du deuxième indice (411-3) est modifié sur base de la position du poids correspondant au premier indice (411-1,411-2) et de la position du poids correspondant au deuxième indice (411-3), et
la deuxième matrice de poids (525) est générée en se basant sur les positions des poids (407-1,407-2), la position du poids supplémentaire (407-3) et l'indice modifié.
